(19) Europäisches Patentamt
European Patent Office
Office européen des brevets

(11) **EP 4 075 179 B1**

(12) **EUROPEAN PATENT SPECIFICATION**

(45) Date of publication and mention
of the grant of the patent:
**04.12.2024  Bulletin 2024/49**

(21) Application number: **22178091.9**

(22) Date of filing: **18.09.2020**

(51) International Patent Classification (IPC):
*G02B 7/02* *(2021.01)*      *G02B 13/00* *(2006.01)*
*G03B 17/04* *(2021.01)*      *G03B 19/22* *(2021.01)*
*G03B 30/00* *(2021.01)*

(52) Cooperative Patent Classification (CPC):
**G02B 7/021; G02B 7/023; G02B 13/0045;
G03B 17/04; G03B 19/22; G03B 30/00;**
H04N 23/55

(54) **SLIM POP-OUT CAMERAS**

SCHLANKE POPOUT-KAMERAS

APPAREILS PHOTO ESCAMOTABLES FINS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.09.2019  US 201962904913 P
18.05.2020  US 202063026317 P
11.06.2020  US 202063037836 P**

(43) Date of publication of application:
**19.10.2022  Bulletin 2022/42**

(62) Document number(s) of the earlier application(s) in
accordance with Art. 76 EPC:
**20869604.7 / 3 899 623**

(73) Proprietor: **Corephotonics Ltd.
6971035 Tel Aviv (IL)**

(72) Inventors:
• **SHABTAY, Gal**
**6958313 Tel Aviv (IL)**

• **YEDID, Itay**
**9979700 Karme Yosef (IL)**
• **KORMAN, Tal**
**6936059 Tel Aviv (IL)**
• **RUDNICK, Roy**
**6437313 Tel Aviv (IL)**
• **GOLDSTEIN, Kobi**
**7313300 Lapid (IL)**
• **KOWAL, Yiftah**
**7627603 Rehovot (IL)**
• **DROR, Micha**
**7401905 Nes Ziona (IL)**
• **SCHERER, Michael**
**6910705 Tel Aviv (IL)**

(74) Representative: **Kasche & Partner
Bühlstrasse 1
8125 Zollikerberg/Zürich (CH)**

(56) References cited:
**US-A1- 2011 102 911      US-A1- 2015 153 548
US-A1- 2019 107 651**

**Description**

CROSS REFERENCE TO RELATED APPLICATIONS

This application is related to and claims priority from US Provisional Patent Applications No. 62/904,913 filed September 24, 2019, 63/026,317 filed May 18, 2020 and 63/037,836 filed June 11, 2020.

FIELD

The present disclosure relates in general to digital cameras, and more particularly, to digital cameras with pop-out mechanisms and lenses.

BACKGROUND

Compact multi-aperture digital cameras (also referred to as "multi-lens cameras" or "multi-cameras") and in particular dual-aperture (or "dual-camera") and triple-aperture (or "triple-camera") digital cameras are known. Miniaturization technologies allow incorporation of such cameras in compact portable electronic devices such as tablets and mobile phones (the latter referred to hereinafter generically as "smartphones"), where they provide advanced imaging capabilities such as zoom, see e.g. co-owned PCT patent application No. PCT/IB2063/060356, which is incorporated herein by reference in its entirety. A typical triple-camera system (exemplarily including an ultra-wide-angle (or "Ultra-Wide" or "UW") camera, wide-angle (or "Wide") camera and a telephoto (or "Tele") camera.

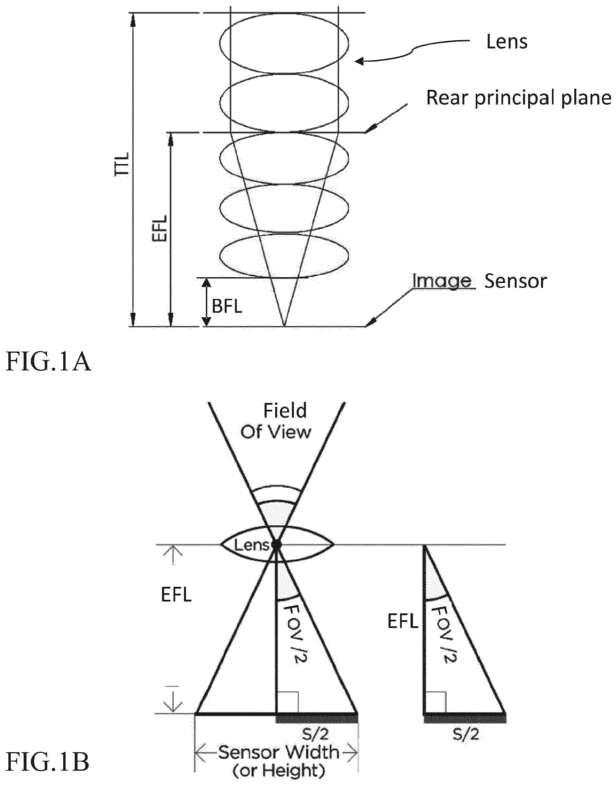

A challenge with dual-aperture zoom cameras relates to camera height and size of image sensor ("Sensor Diagonal" or $S_D$). There is a large difference in the height (and also of the total track length or "TTL") of the Tele and Wide cameras. FIG. 1A illustrates schematically the definition of various entities such as TTL, effective focal length (EFL) and back focal length (BFL). The TTL is defined as the maximal distance between the object-side surface of a first lens element and a camera image sensor plane. The BFL is defined as the minimal distance between the image-side surface of a last lens element and a camera image sensor plane. In the following, "W" and "T" subscripts refer respectively to Wide and Tele cameras. The EFL has a meaning well known in the art. In most miniature lenses, the TTL is larger than the EFL, as in FIG. 1A.

FIG. 1B shows an exemplary camera system having a lens with a field of view (FOV), an EFL and an image sensor with a sensor width S. For fixed width/height ratios of a (normally rectangular) image sensor, the sensor diagonal is proportional to the sensor width and height. The horizontal FOV relates to EFL and sensor width as follows:

$$\tan\left(\frac{FOV}{2}\right) = \frac{S/2}{EFL}$$

This shows that for realizing a camera with a larger image sensor width (i.e. larger sensor diagonal) but same FOV, a larger EFL is required.

In mobile devices, typical Wide cameras have 35mm equivalent focal lengths ("35eqFL"). ranging from 22mm to 28mm. Image sensors embedded in mobile cameras are smaller than full frame sensors and actual focal lengths in Wide cameras range from 3.2mm to 7mm, depending on the sensor size and FOV. In most lenses designed for such cameras, the TTL/EFL ratio is larger than 1.0 and is typically between 1.0 and 1.3. Another characteristic of these lenses is that their TTL-to-sensor diagonal ratio TTL/$S_D$ is typically in the range of 0.6 to 0.7. Embedding larger sensors in Wide cameras is desirable, but require larger EFL for maintaining the same FOV, resulting in larger TTL, which is undesirable.

Many mobile devices include now both Tele and Wide cameras. The Tele camera enables optical zoom and other computational photography features such as digital Bokeh. Depending on the Wide camera characteristics and permissible module height, the 35eqFL of mobile device Tele cameras ranges from 45mm to 100mm. The TTL of lenses designed for Tele cameras is smaller than the EFL of such lenses, typically satisfying 0.7<TTL/EFL<1.0. Typical Tele EFL values range from 6mm to 10mm (without applying 35mm equivalence conversion) in vertical (non-folded) Tele cameras and from 10mm to 30mm in folded Tele cameras. Larger EFL is desirable for enhancing the optical zoom effect but it results in larger TTL, which is undesirable.

In a continuous attempt to improve the obtained image quality, there is a need to incorporate larger image sensors into the Wide and Tele cameras. Larger sensors allow for improved low-light performance and larger number of pixels, hence improving the spatial resolution as well. Other image quality characteristics, such as noise characteristics, dynamic range and color fidelity may also improve as the sensor size increases.

As the Wide camera sensor becomes larger, the required EFL is larger (for the same 35mm equivalent focal length), the lens TTL increases and the camera module height becomes larger, resulting in a limit on the permissible sensor size when considering the allowed mobile device thickness or other industrial design constraints. In Wide cameras of most mobile devices, the sensor pixel array size full diagonal ranges from about 4.5mm (typically referred to as 1/4" sensor) to 16mm (typically referred to 1" sensor).

It would be beneficial to have Wide and/or Tele lens designs that support large EFLs for large sensor diagonals (optical zoom) while still having small TTL for slim design. The latter is presented for example in co-owned US provisional patent application No. 62/904,913.

US2015153548A1 discloses: A zoom lens includes: in an order from an object side to an image side, a first lens group having a positive refractive power; a second lens group having a negative refractive power; a third lens group having a positive refractive power; and a fourth lens group having a positive refractive power, wherein, when zooming is performed from a wide angle position to a telephoto position, the first through fourth lens groups move, and the first lens group includes a first negative lens and a second positive lens from the object side. The zoom lens may be part of an electronic apparatus, such as a photographing apparatus.

US2011102911A1 describes: At least one object of the present invention is to provide a lens barrel, including: a fixed frame (21) having a fixed cylinder (21); a telescopic cylinder (22, 23, 24, etc.) configured to be accommodated within the fixed cylinder (21); a plurality of lens groups (11, 12) configured to be retained in the telescopic cylinder; a lens driving device (51, 52, etc.) configured to drive the plurality of lens groups along a optical axis of the telescopic cylinder between a collapsed position and an extended position; and two retractable lens groups (13, 14) configured to be retracted into the telescopic cylinder when the telescopic cylinder is in the extended position and configured to be retracted out of the telescopic cylinder when the telescopic cylinder is in the collapsed position.

US20190107651A1 describes an optical system that produces a digital image of a field of view, the optical system including: a) a sensor array of light sensors that produces an output signal indicating an intensity of light received by each light sensor; b) one or more optical elements that together project an image of the field of view onto the sensor array, including at least one sectioned optical element comprising a plurality of sections, at least two of the sections differing in one or both of size and shape, each section projecting onto the sensor array an image of only a portion of the field of view, the different sections projecting images of different portions of the field of view to non-overlapping regions of the sensor array.

SUMMARY

In various examples, there are provided digital cameras comprising: an optics module comprising a lens assembly that includes N lens elements $L_i$-$L_n$ starting with $L_i$ on an object side, wherein $N > 4$; an image sensor having a sensor diagonal Sd in the range of 5-20mm; and a pop-out mechanism configured to control at least one air-gap between lens elements or between a lens element and the image sensor to bring the camera to an operative pop-out state and to a collapsed state, wherein the lens assembly has a total track length TTL in the operative pop-out state and a collapsed total track length cTTL in the collapsed state, and wherein cTTL/ Sd < 0.6.

For simplicity, in the description below, "lens" may be used instead of "lens assembly".

Henceforth and for simplicity, the use of the term "pop-out" before various components may be skipped, with the understanding that if defined the first time as being a "pop-out" component, that component is such throughout this description.

In various examples of cameras above and below, the window pop-up mechanism includes a window frame engageable with the optics module, wherein the window frame does not touch the optics module in the pop-out state and wherein the window frame is operable to press on the optics module to bring the camera to the collapsed state. The window frame includes a window that is not in direct contact with the lens.

In some examples, the largest air-gap d is between $L_{N-i}$ and $L_N$.

In some examples, the largest air-gap d is between Ln-2 and Ln-i or between Ln-i and Ln, and the lens assembly has a 35mm equivalent focal length 35eqFL between 40mm and 150mm. In such an example, d may be larger than TTL/5.

In some examples, cTTL/$S_D$ < 0.55.

In some examples, $S_D$ is in the range of 10mm to 15mm.

In some examples, a camera as above or below is included in a multi-camera together with a second camera having a second total track length $TTL_2$ in the range of 0.9xTTL to 1.1xTTL.

In some examples, the lens assembly has a 35mm equivalent focal length 35eqFL larger than 24mm.

In some examples, the lens assembly has an effective focal length EFL and ratio TTL/EFL is smaller than 1.4 and larger than 1.0.

In various examples, there are provided digital cameras comprising an optics module comprising a lens assembly that includes N lens elements $L_1$-$L_N$ starting with $L_1$ on an object side, wherein $N \geq 4$ and wherein the lens assembly has a back focal length BFL that is larger than any air-gap between lens elements and has an effective focal length EFL in the range of 7mm to 18mm; a pop-out mechanism configured to actuate the lens assembly to an operative pop-out state and to a collapsed state, wherein the lens assembly has a total track length TTL in the operative pop-out state and a collapsed total track length cTTL in the collapsed state, and wherein the pop-out mechanism is configured to control the BFL such that cTTL/EFL < 0.55; and an image sensor having sensor diagonal $S_D$.

In some examples, a pop-out mechanism includes a window pop-out mechanism based on a pin-groove assembly, and one or more of the pins slide in vertically oriented grooves and one or more pins slide in angled grooves that have an angle of 20-80 degrees, 30-70 degrees or 40-60 degrees with respect to the vertical.

In some examples, a pop-out mechanism includes a barrel pop-out mechanism that comprises springs and a guiding and positioning mechanism that enables sufficient z-decenter and xy-decenter accuracy between lens elements in the operative pop-out state and enables repeatability in switching between operative and collapsed states, wherein the sufficient decenter accuracy is less than 0.1mm decenter and wherein the repeatability is less than 0.05mm decenter. In other examples, the sufficient decenter accuracy is less than 0.8mm decenter and the repeatability is less than 0.04mm decenter. In yet other examples, the sufficient decenter accuracy is less than 0.6mm decenter and the repeatability is less than 0.03mm decenter. The guiding and positioning mechanism may be based on a pin and groove assembly, on a stopper or on a kinematic coupling mechanism. In some examples, a guiding mechanism may be based on a pin-groove assembly and a positioning mechanism based on a magnetic force.

In some examples, $S_D$ is in the range of 4.5mm to10mm and the lens assembly has a 35eqFL larger than 45mm and smaller than 180mm.

In some examples, $S_D$ is in the range of 10mm to 20mm and the lens assembly has a 35eqFL larger than 40mm and smaller than 180mm.

In some examples, ratio TTL/EFL is smaller than 1.0 and larger than 0.7.

In some examples, BFL is larger than TTL/3 and smaller than TTL/1.5.

In some examples of cameras as above or below, the lens has a lens element with a largest lens diameter $d_L$, wherein a penalty between a largest diameter $d_{module}$ of the optics module and the largest lens diameter $d_L$ is smaller than 4mm, tan 2 mm or even than 1 mm.

In various examples, there are provided multi-cameras comprising: a first camera that includes a first lens assembly with a first field of view $FOV_1$ and N lens elements $L_1$-$L_N$ starting with $L_1$ on an object side wherein N ≥ 4, a first image sensor having a sensor diagonal $S_{D1}$, and a pop-out mechanism that controls a largest air-gap d between two consecutive lens elements to bring the first camera to an operative pop-out state and a collapsed state, wherein the first lens assembly has a first 35mm equivalent focal length $35eqFL_1$, a total track length $TTL_1$ in the operative state and a collapsed total track length $cTTL_1$ in the collapsed state, wherein $S_{D1}$ is in the range 7-20mm and wherein $cTTL_1$/ $S_{D1}$ < 0.6; and a second camera having a second camera effective focal length $EFL_2$ of 7-18 mm and including a second lens assembly with a second field of view $FOV_2$ smaller than $FOV_1$, the second lens assembly comprising M lens elements $L_1$-$L_M$ starting with $L_1$ on an object side wherein M ≥4, and a pop-out mechanism configured to actuate the second camera to an operative state and a collapsed state, wherein the second lens assembly has a second 35mm equivalent focal length $35eqFL_2$, a total track length $TTL_2$ in the operative state and a collapsed total track length $cTTL_2$ in the collapsed state, and wherein cTTL/EFL < 0.55.

In some examples, $cTTL_1 = cTTL_2 \pm 10\%$.

In some examples, $35eqFL_2 \geq 1.5 \times 35eqFL_1$.

In some examples, 35eqFLi is larger than 24mm.

In some examples, $35eqFL_2$ is larger than 45mm.

In various examples, there are provided multi-cameras comprising: a Wide camera comprising a lens barrel carrying a Wide lens assembly comprising N≥ 4 lens elements $L_1$-$L_N$ starting with $L_1$ on an object side, an image sensor having a Wide sensor diagonal $S_{DW}$, and a first pop-out mechanism that controls an air-gap $d_{N-1}$ between lens elements $L_N$ and $L_{N-1}$ to bring the camera to an operative state and a collapsed state, wherein the Wide lens assembly has a field of view FOVw, a total track length $TTL_W$ in the operative state and a collapsed total track length cTTLw in the collapsed state, wherein if $S_{DW}$ is in the range 10-16mm then cTTLw/ $S_{DW}$ < 0.6; and a Tele camera comprising a lens barrel carrying a Tele lens assembly comprising N is ≥ 4 lens elements $L_1$-$L_N$ starting with $L_1$ on an object side, a Tele image sensor having a sensor diagonal $S_{DT}$ and a second pop-out mechanism that controls an air-gap between lens element $L_N$ and the Tele image sensor to bring the camera to an operative state and a collapsed state, wherein the Tele lens assembly has a field of view $FOV_T$ smaller than FOVw, a $TTL_T$ in the operative state and a $cTTL_T$ in the collapsed state, wherein if $S_{DT}$ is in the range 4.5-10mm then $cTTL_T$<$EFL_T$<0.55, and wherein $cTTL_W = cTTL_T \pm 10\%$.

In some examples, the multi-camera is embedded in a device having a device exterior surface, and in an operative state the camera extends beyond the device exterior surface by 2mm-7mm and in a non-operative state the cameras extends beyond the device exterior surface by less than 2mm.

In some examples, 7mm < $TTL_W$ < 13mm, 1.0 < $TTL_W$/$EFL_W$< 1.3 and $d_{N-1}$ is greater than TTL/4.

In some examples, there is provided a camera comprising: a lens assembly comprising N lens elements $L_1$-$L_N$ starting with $L_1$ on an object side wherein N ≥ 4; a curved image sensor having a sensor diagonal $S_D$ in the range of 7-20mm; and a pop-out mechanism that controls an air-gap d between $L_N$ and the image sensor to bring the camera to an operative pop-out state and a collapsed state, wherein the lens assembly has a total track length TTL in the operative pop-out state and a collapsed total track length cTTL in the collapsed state, wherein $cTTL/S_D < 0.6$ and wherein the lens assembly has a 35mm equivalent focal length 35eqFL that is smaller than 18mm.

BRIEF DESCRIPTION OF THE DRAWINGS

Non-limiting examples of embodiments disclosed herein are described below with reference to figures attached hereto that are listed following this paragraph. Identical structures, elements or parts that appear in more than one figure are generally labeled with a same numeral in all the figures in which they appear. If identical elements are shown but numbered in only one figure, it is assumed that they have the same number in all figures in which they appear. The drawings and descriptions are meant to illuminate and clarify embodiments disclosed herein and should not be considered limiting in any way. In the drawings:

FIG. 1A illustrates schematically the definition of various entities such as TTL and EFL;
FIG. 1B shows definitions of FOV, EFL and S for a thin lens approximation or equivalence;
FIG. 2A shows a cross sectional view of a pop-out camera disclosed herein in an in a pop-out state and incorporated in a host device;
FIG. 2B shows a cross sectional view of a pop-out frame of the camera of FIG. 2A;
FIG. 2C shows a cross sectional view of the camera of FIG. 2A in a collapsed state;
FIG. 2D shows a cross sectional view of the frame shown in FIG. 2B in a collapsed state;
FIG. 3A shows a perspective view of the camera of FIG. 2A in the pop-out state;
FIG. 3B shows a perspective view of the camera of FIG. 2A in the collapsed state;
FIG. 4A shows in cross section a lens module in the camera of FIG. 2A;
FIG. 4B shows the same as FIG. 4A in a perspective view;
FIG. 4C shows an example of an optical lens system that may be used in a pop-out camera disclosed herein;
FIG. 5A shows in cross section a lens module in the camera of FIG. 2A in the collapsed state;
FIG. 5B shows the same as FIG. 5A in a perspective view;
FIG. 6A shows in cross section another example of a lens module in a pop-out state;
FIG. 6B shows in cross section the pop-out lens module of FIG. 6A in a collapsed state;
FIG. 6C shows another example of an optical lens system that may be used in a pop-out camera disclosed herein;
FIG. 7 shows a perspective view of the lens module of FIG. 6A;
FIG. 8 shows a perspective view of the lens module of FIG. 6B;
FIG. 9A shows a perspective view of an actuator of the pop-out mechanism in a pop-out state;
FIG. 9B shows a perspective view of the actuator of FIG. 9A in a collapsed state;
FIG. 10 shows yet another example of an optical lens system that may be used in a pop-out camera disclosed herein;
FIG. 11A shows an example of a smartphone with a dual-camera that includes a regular folded Tele camera and an upright pop-out Wide camera;
FIG. 11B shows details of the cameras of FIG. 11A with the Wide pop-out camera being in a pop out state;
FIG. 11C shows the smartphone of FIG. 11A with the Wide pop-out camera in a collapsed state;
FIG. 11D shows details of the cameras of FIG. 11A, with the Wide pop-out camera being in a collapsed state;
FIG. 12A shows another example of a smartphone with a dual-camera comprising an upright Tele camera and an upright Wide camera, with both cameras in a pop-out state;
FIG. 12B shows details of the cameras of the smartphone in FIG. 12A in a pop-out state;
FIG. 12C shows the smartphone of FIG. 12A with both cameras in a collapsed state;
FIG. 12D shows details of the cameras of the smartphone in FIG. 12A in a collapsed state;
FIG. 13 shows yet another example of an optical lens system can be included in a pop-out camera disclosed herein;
FIG. 14A shows in cross sectional view another example of a pop-out camera disclosed herein in a pop-out state and incorporated in a host device;
FIG. 14B shows a perspective view of a frame in the pop-out camera of FIG. 14A;
FIG. 14C shows in cross section the camera of FIG. 14A in a collapsed state;
FIG. 14D shows a perspective view of the frame of FIG. 14B in a collapsed state;
FIG. 15A shows in cross-section a pop-out mechanism in the camera of FIG. 14A;
FIG. 15B shows the mechanism of FIG. 15A in a collapsed state;
FIG. 16A shows a cross sectional view of another example of a pop-out optics module in a pop-out state;
FIG. 16B shows a perspective view of the pop-out optics module of FIG. 16A;
FIG. 17A shows in perspective view the pop-out optics module of FIG. 16A in a pop-out state;
FIG. 17B shows in perspective view the pop-out optics module of FIG. 16A in a collapsed state;
FIG. 18A shows a perspective view of an optics frame in the optics module of FIG. 16A a pop-out state;
FIG. 18B shows a perspective view of the optics frame of FIG. 18A in a collapsed state;

FIG. 18C shows a section of the optics frame of FIG. 18A in more detail;

FIG. 18D shows a section of optics frame of FIG. 18B in more detail;

FIG. 18E shows the optics frame of FIG. 18A in a top view;

FIG. 18F shows the optics frame of FIG. 18A in an exploded view;

FIG. 19A shows a perspective view of yet another example of an optics module in a pop-out state;

FIG. 19B shows the optics module of FIG. 19A in a top view;

FIG. 19C shows the optics module of FIG. 19A in a pop-out state in a cross-sectional view;

FIG. 19D shows the optics module of FIG. 19A in a collapsed state in a cross-sectional view;

FIG. 19E shows a top cover and a magnet of the optics module of FIG. 19A in a perspective view;

FIG. 19F shows the top cover and magnet of the optics module of FIG. 19E in a top view;

FIG. 20A shows a magnet part of window position measurement mechanism in a side view;

FIG. 20B shows the window position measurement mechanism of FIG. 20A in a perspective view;

FIG. 20C shows a side view of 3 magnets and a Hall sensor of the window position measurement mechanism of FIG. 20A in a collapsed state;

FIG. 20D shows a side view of the 3 magnets and the Hall sensor of the window position measurement mechanism of FIG. 20A in a pop-out state;

FIG. 20E shows an example of a design and magnetic field of the window position measurement mechanism of FIG. 20A;

FIG. 20F shows an example of a magnet configuration that may be included in the position measurement mechanism;

FIG. 20G shows another example of another magnet configuration that may be included in a position measurement mechanism.

## DETAILED DESCRIPTION

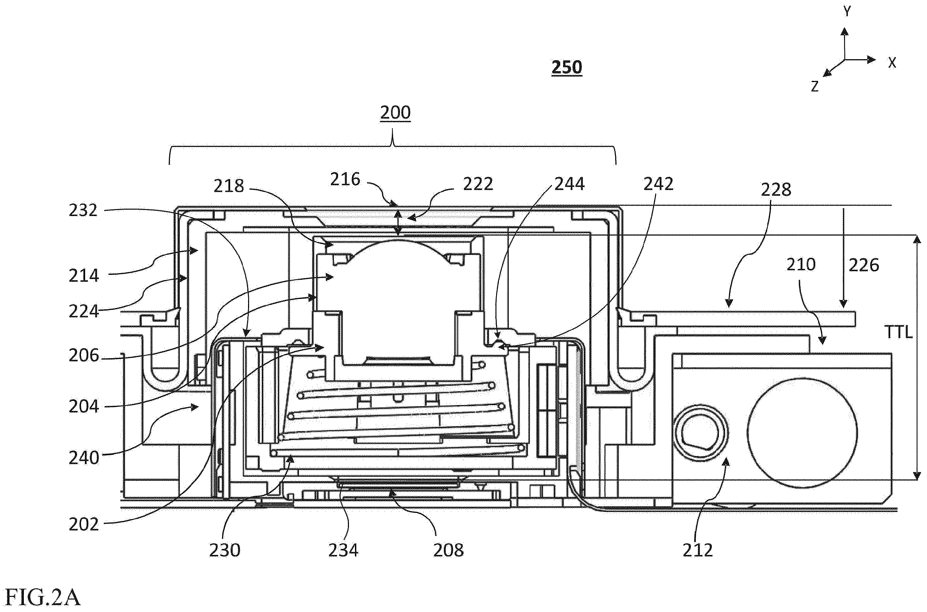

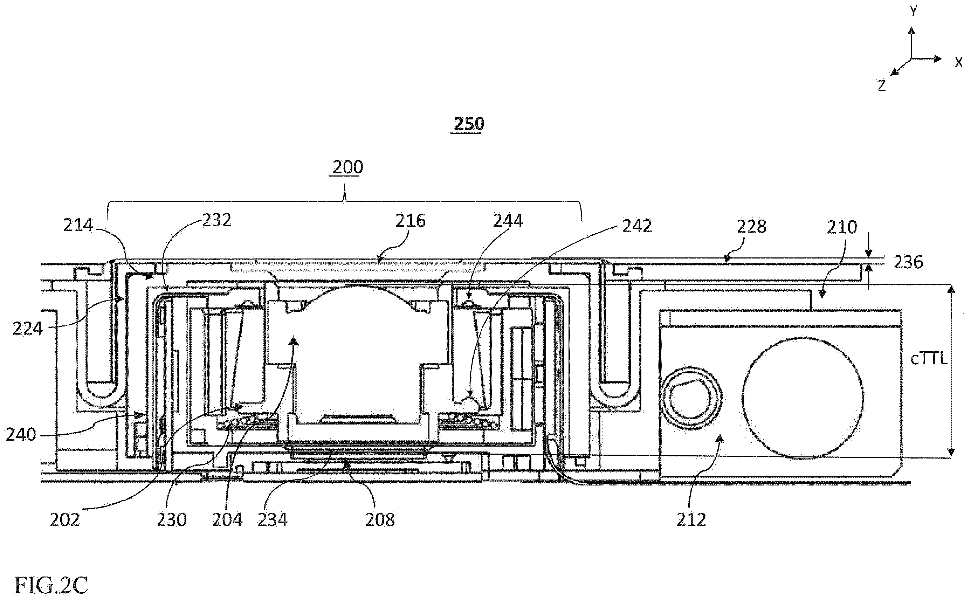

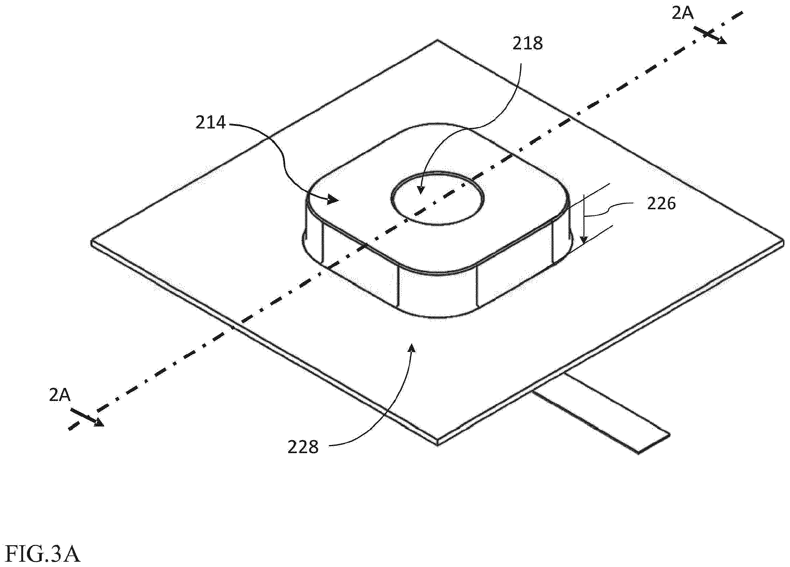

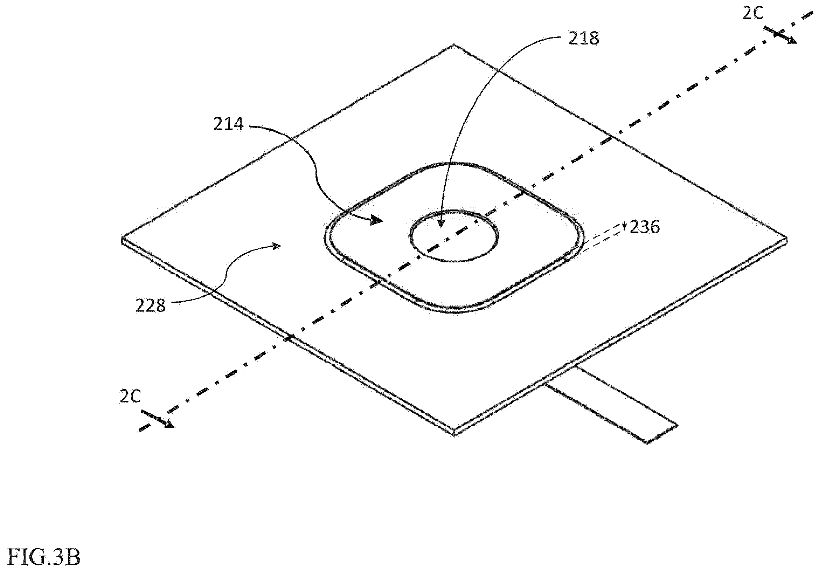

FIG. 2A shows in cross sectional view (through cross section marked 2A-2A in FIG. 3A) an example numbered **200** of a pop-out camera disclosed herein incorporated in a "host" device **250** (e.g. a smartphone, tablet, etc.). In FIG. 2A, camera **200** is shown in an operative or "pop-out" state-(and thus referred to as a "camera in pop-out state"). Camera **200** has also a collapsed ("c" or "non-operative") state, shown in FIG. 2C. In this state, the camera is not operative as a camera in pop-out state. FIG. 3A shows camera **200** in the pop-out state and FIG. 3B shows camera **200** in the collapsed state, both in perspective views.

Camera **200** comprises a general pop-out mechanism **210** and a pop-out optics module **240**. Optics module **240** comprises a lens barrel holder **202** carrying a pop-out lens barrel **204** with a pop-out lens assembly **206,** and in some cases ("examples") an image sensor **208**. In some examples, the image sensor may be separate from the optics module. Lens barrel **204** and window **216** are separated by an air-gap **222** of, for example, 0.15-3mm. Air-gap **222** allows for a movement of the lens barrel by 0.1-3mm for performing auto-focus (AF) and optical image stabilization (OIS) by moving the lens as known in the art. Optics module **240** is covered by a cover **232**. In some examples, the pop-out lens barrel (e.g. a lens barrel **602**) may be divided into two or more sections, e.g. in a fixed lens barrel section and a collapsible barrel section.

General pop-out mechanism **210** comprises a "window" pop-out mechanism (external to the optics module) and a "barrel" pop-out mechanism with some parts external to and some parts internal to the optics module. The window pop-out mechanism raises and lowers the window. The barrel pop-out mechanism enables the pop-out and collapsed lens barrel states.

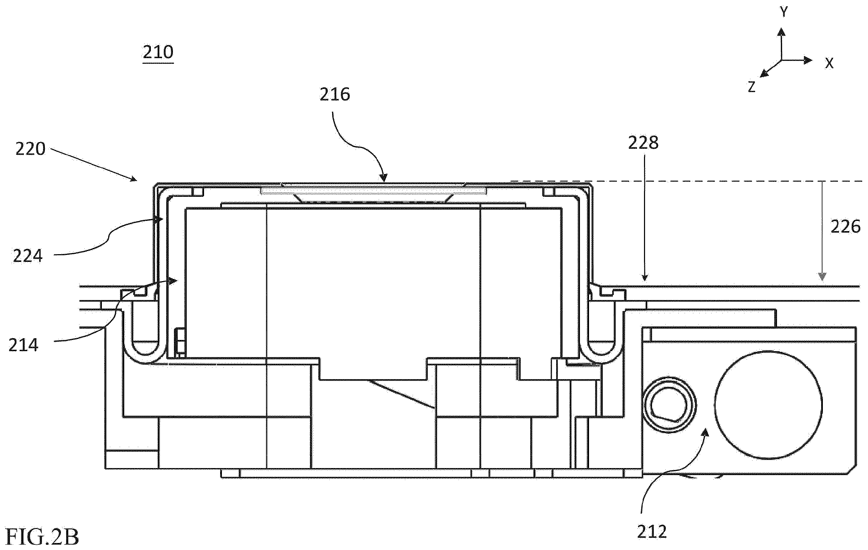

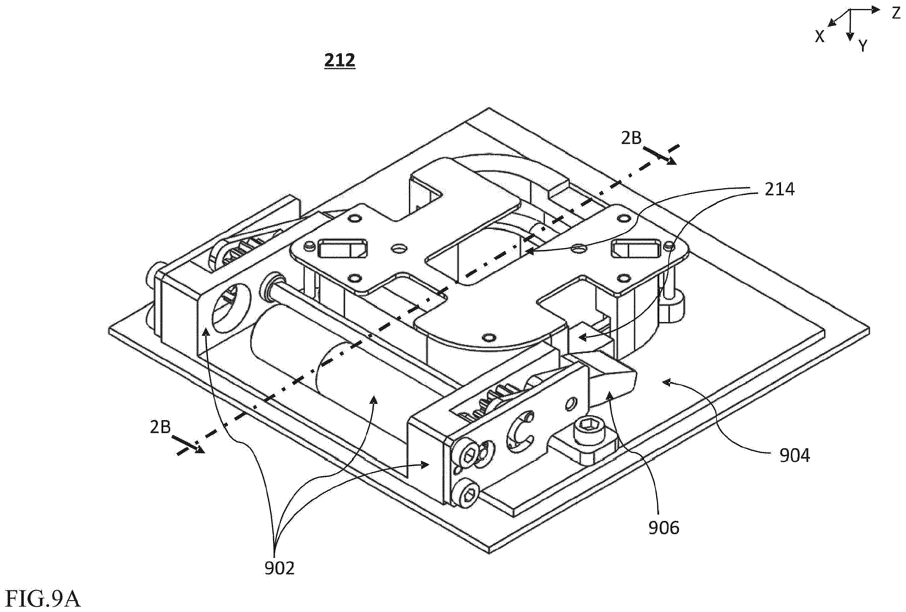

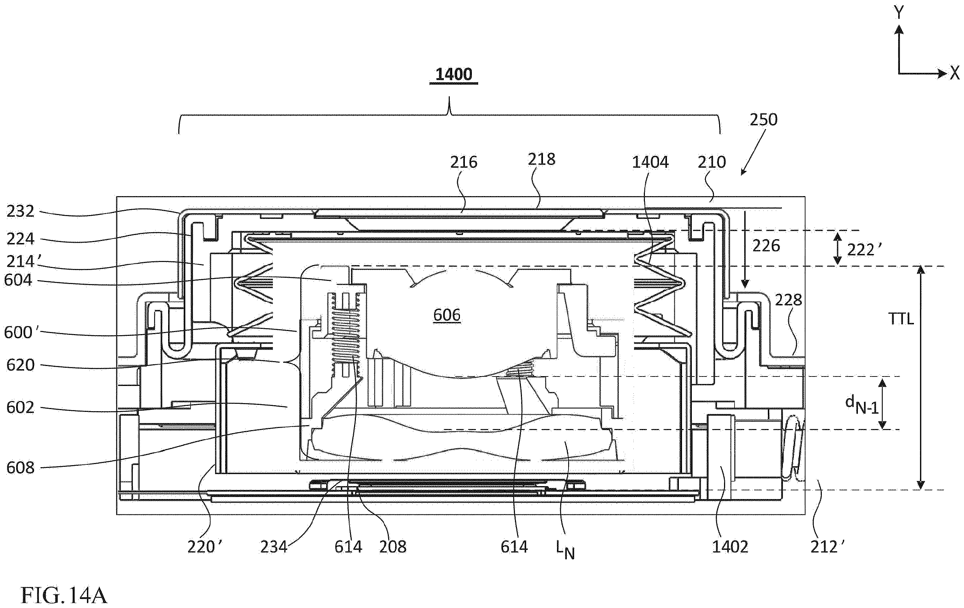

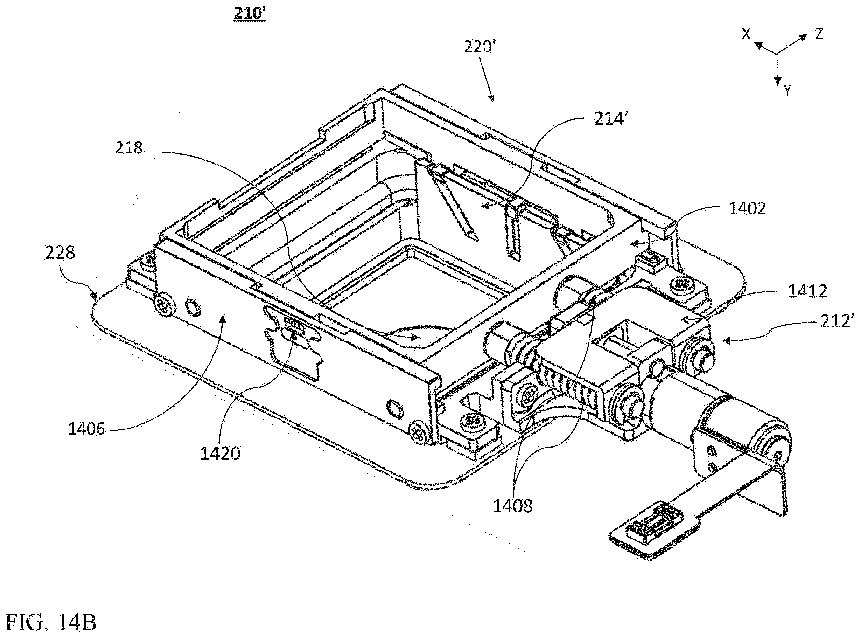

The window pop-out mechanism includes parts shown in detail for example in FIG. 9A-B, FIG. 14B, FIG. 14D, FIGS. 15A-B, FIGS. 20A-F. Specifically, the window pop-out mechanism comprises an actuator like **212** or **212'**, a pop-out frame **220** (see e.g. FIG. 2B) that includes a window frame **214** carrying a window **216** that covers an aperture **218** of the camera, and an external module seal **224**. External module seal **224** prevents particles and fluids from entering the camera and host device **250**. In some embodiments (e.g. in a frame **220'** described with reference to FIGS. 14A-D), a pop-out frame may include additional parts such as a cam follower (e.g. **1402** in FIG. 14A), a side limiter (e.g. **1406** in FIG. 14A) and a window position measurement mechanism (e.g. **1420** in FIG. 14B).

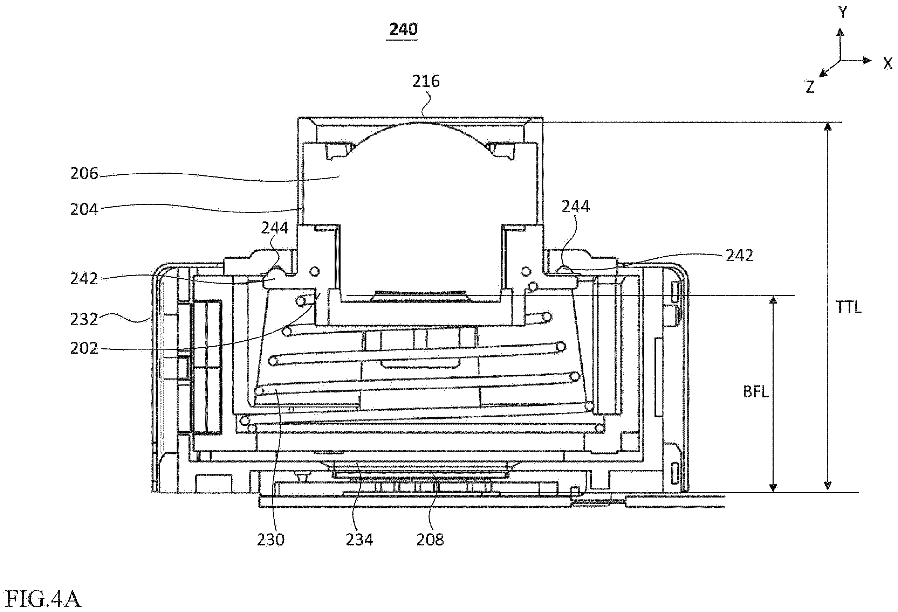

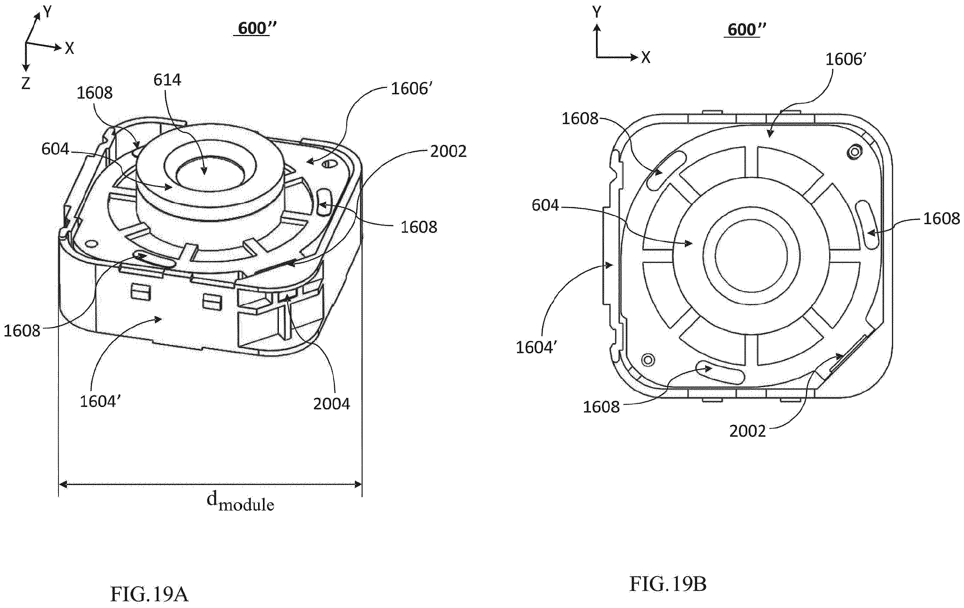

The barrel pop-out mechanism includes parts shown in detail for example in FIGS. 4A, 5A, 6A-B, 14A, 14C, 16A, 17A-B, 18A-F and 19A-F. Specifically, the barrel pop-out mechanism may include one or more springs **230,** pop-out lens barrel **204** with pop-out lens assembly **206,** one or more springs **230** and a guiding and positioning mechanism (see e.g. FIGS. 19A-19B and description below). The one or more springs push optics module **240** towards frame **220,** i.e. when frame **220** moves upwards for switching from a collapsed state to a pop-out state, no further actuation mechanism within the optics module is required.

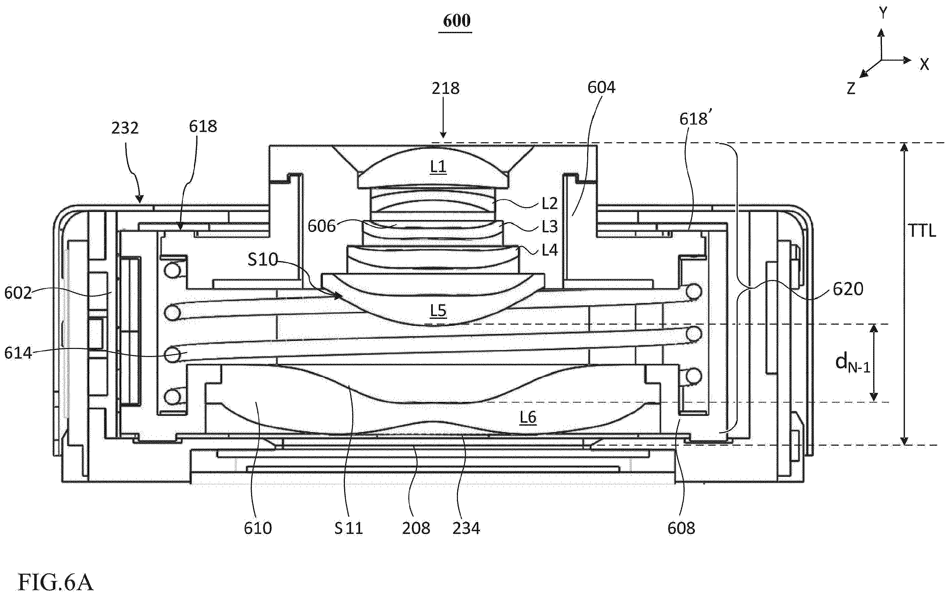

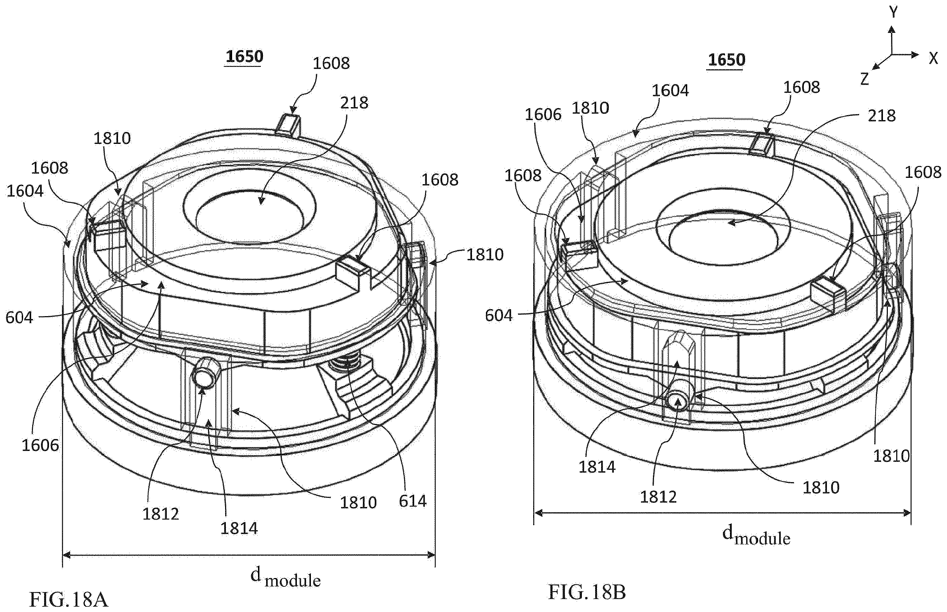

The guiding and positioning mechanism positions the lens groups and optical components in fixed distance and orientation. In an example, the guiding and positioning mechanism comprises a pin **242** and a groove **244** (see FIG. 2C, FIG. 4A and FIG. 5A). In some examples, the guiding and positioning mechanism may include a stopper **618** (see FIG. 6A-B), a kinematic coupling mechanism (see FIG. 18A-D) or a magnet-yoke assembly (see FIGS. 19A-F). In some examples, the guiding and positioning mechanism works by means of an interplay between an optics module and another component of a camera such as camera **200** (see e.g. FIG. 6A-B and FIG. 19A-F). Pin **242** and groove **244** provide a first example of a pin-groove assembly. Groove **244** may comprise a v-shaped groove or another groove, with groove **244** having legs at an angle of e.g. 30-150 degrees. Other pin-groove assemblies are described below. In some examples, the guiding and positioning mechanism is included in an optics module in its entirety (see e.g. FIG. 4A and FIG. 5A and FIG. 18A-D).

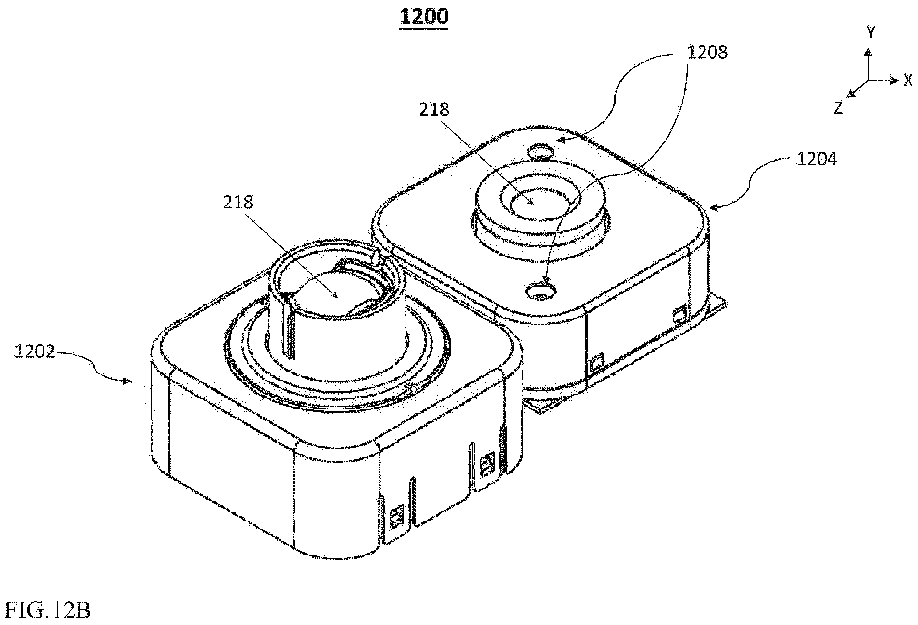

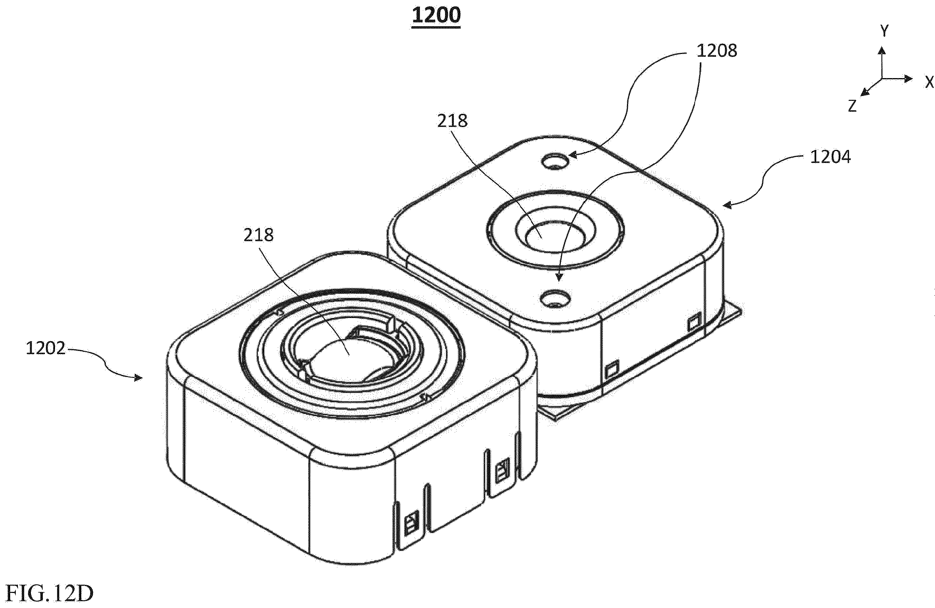

The pin-groove assembly with pin **242** and groove **244** provides mechanical stability and repeatability in the X-Z plane and in the Y plane of the coordinate system shown. Stopper **618** provides mechanical stability and repeatability in Y plane. In some examples, other pins such as pins **1206** (see FIG. 12B and FIG. 12D) may be used for providing mechanical stability and repeatability in the X-Z plane.

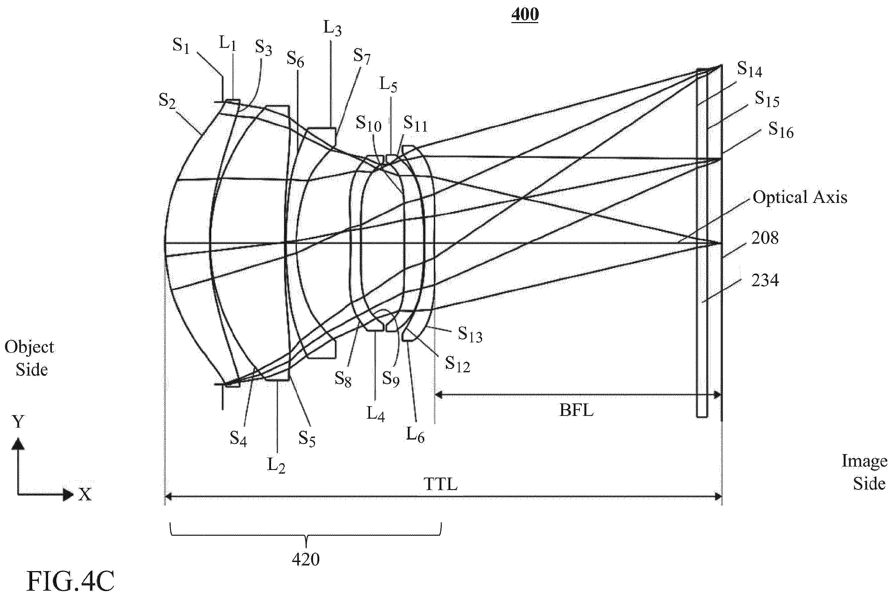

The lens, the image sensor and (optionally) an optical window or "filter" (e.g. IR filter) **234** form a pop-out optical lens system **260** (see e.g. FIG. 4C). The image sensor may have a sensor diagonal $S_D$ in the range 3.5-30mm. For a lens having an EFL of 5mm to 25mm, this typically represents a 35eqFL in the range 10-300mm. Sensor diagonal $S_D$ connects to a sensor width W and a height H via $S_D = \sqrt{(W^2+H^2)}$. In other examples EFL may be 8mm to 28mm.

To switch between pop-out and collapsed states, pop-out mechanism **210** causes the following movements in frame **220** (where all movements are defined relative to the host device and the coordinate systems shown): a horizontal (i.e. in the X-Z plane) movement of the cam follower and a vertical (i.e. in the Y direction) movement of the window frame. The movement in frame **220** causes a vertical (Y direction) movement of the lens barrel (for a single group or "1G" lens) or of a collapsible section of the lens barrel (in a two group or "2G" lens) in optics module **240.** The image sensor and the side limiter do not move. Importantly, the barrel pop-out mechanism does not include an actuator.

In the pop-out state shown in FIG. 2B, camera **200** forms a significant pop-out bump **226** with respect to an exterior surface **228** of host device **250.** Here, "significant" may be for example 1.5mm-8mm. In the pop-out state, camera **200** increases the height of host device **250** to a "height in a pop-out state".

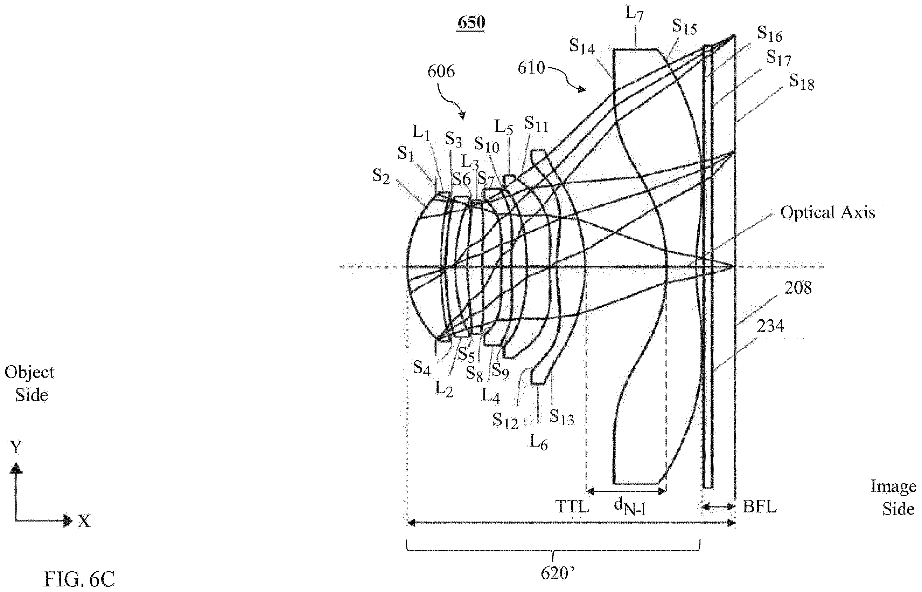

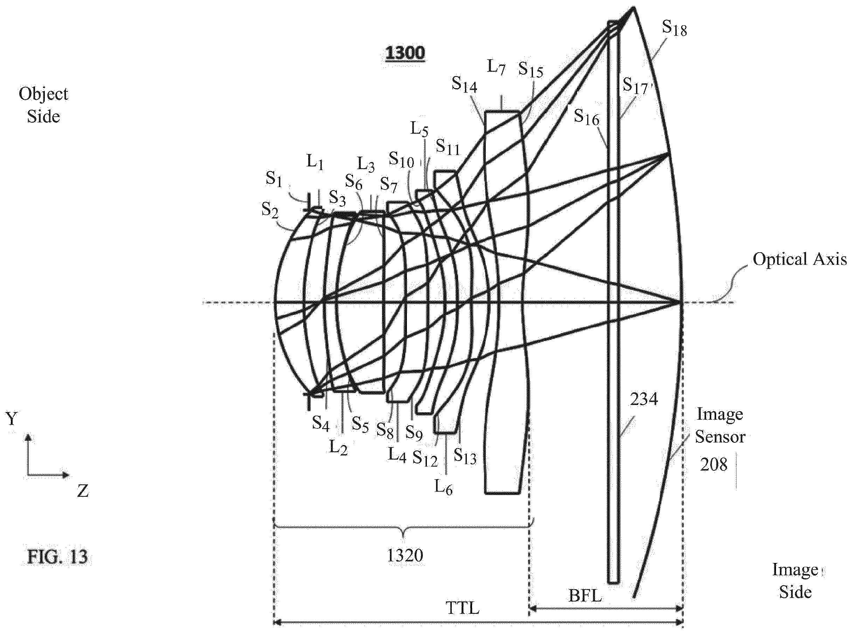

The pop-out lens may be a Tele lens, for example as in FIG. 4C or FIG. 10 or FIG. 6D, or a Wide lens as in FIG. 6C or FIG. 13. Depending on the type of lens, a pop-out camera operates as a pop-out Tele camera or as a pop-out Wide camera. A pop-out Tele camera may have a $FOV_T$ of 20-50 deg. A pop-out Wide camera may have a FOVw of 50-120 deg. The TTL of the lens, measured from the first surface of the first lens element in the lens to the image sensor may be for example 6mm -18mm.

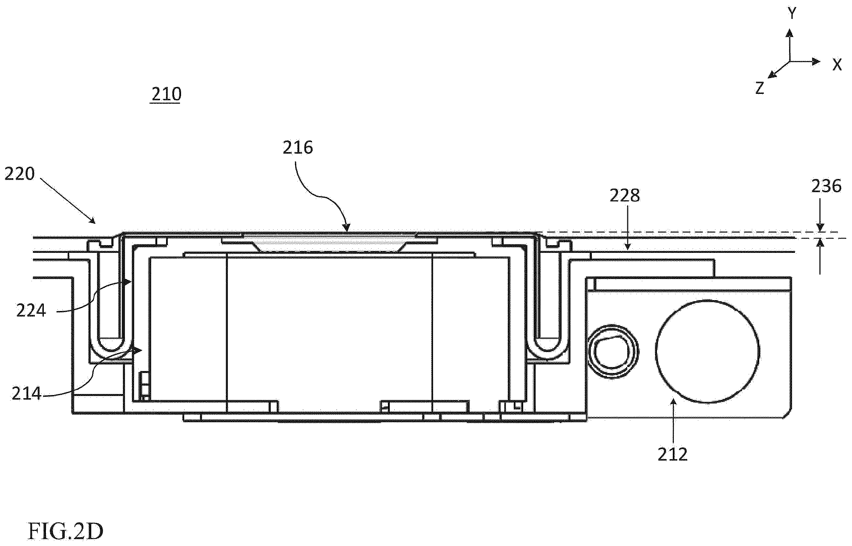

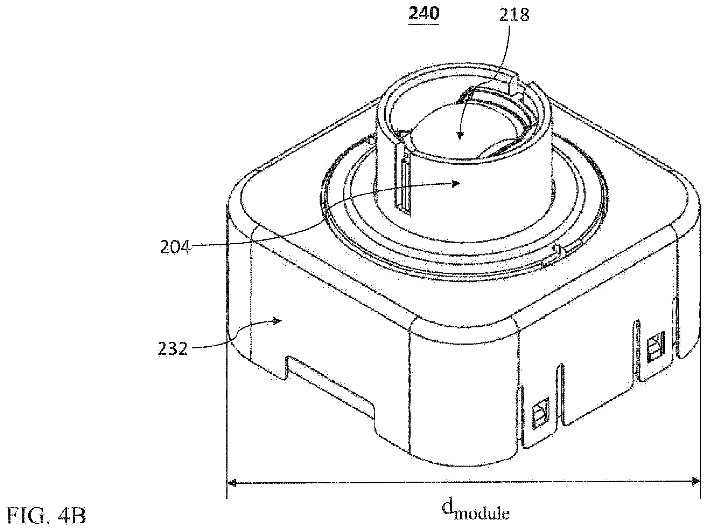

FIG. 2D shows a cross sectional view of frame **220** in the collapsed state. Actuator **212** brings the camera to a collapsed state by performing work against the spring. In the collapsed state, the spring is in a compressed state, see also FIG. 4B. To switch camera **200** to the collapsed state, actuator **212** moves window frame **214** to apply pressure on lens barrel **204.** This translates into a movement of lens barrel **204** towards the image sensor. In the collapsed state, the TTL is a collapsed TTL (cTTL) and may be for example 5-12mm. cTTL is always measured between a first surface of lens element L1 on the image side (marked S2) and an imaging surface of the image sensor along the optical axis marked S16. The difference between cTTL and TTL stems from a modified BFL with respect to the pop-out state. Camera **200** is designed such that there is a large BFL in the operative state. This large BFL can be collapsed to bring the camera to a collapsed state, achieving a slim camera design. In the collapsed state, the camera forms a collapsed bump (c-bump) **236** with respect to device exterior surface **228.** The c-bump may have for example a size (height) of 0-3mm. In the collapsed state, the height of host device **250** is a "height in the collapsed state" that is much smaller than the height in the pop-out state but still larger than the host device height by the c-bump **236.**

Camera **200** may be designed to support, in some examples, accuracy tolerances for decenter of e.g. $\pm20\mu$m in the X-Z plane and of e.g. $\pm10\mu$m in the Y direction, as well as for a tilt of $\pm0.5°$. The planes and directions are as in the coordinate systems shown in the figures. Repeatability tolerances for decenter may be e.g. $\pm10\mu$m in the X-Z plane and of e.g. $\pm5\mu$m in the Y direction, as well as for a tilt of $\pm0.25°$. In other examples, accuracy tolerances for decenter may be e.g. $\pm10\mu$m in the X-Z plane and of e.g. $\pm5\mu$m in the Y direction, as well as e.g. $\pm0.15°$. Repeatability tolerances for decenter may be e.g. $\pm5\mu$m in the X-Z plane and of e.g. $\pm2.5\mu$m in the Y direction, as well as for a tilt of $\pm0.08°$. In yet other examples, accuracy tolerances for decenter may be e.g. $\pm5\mu$m in the X-Z plane and of e.g. $\pm2.5\mu$m in the Y direction, as well as e.g. $\pm0.1°$. Repeatability tolerances for decenter may be e.g. $\pm1.5\mu$m in the X-Z plane and of e.g. $\pm0.8\mu$m in the Y direction, as well as for a tilt of $\pm0.05°$.

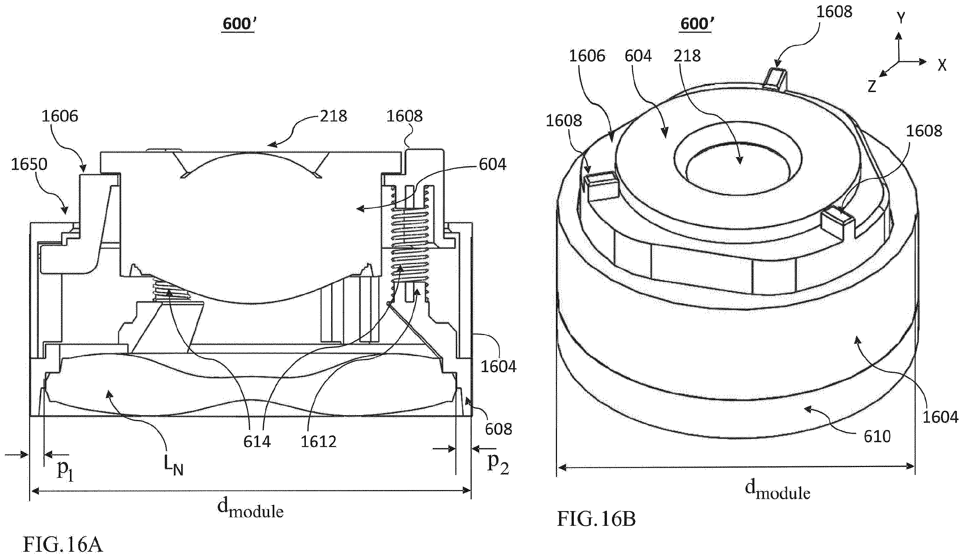

Similar accuracy tolerances and repeatability tolerances hold for optics frame **1650** (see e.g. FIG. 16A) and optics module **600"** (see e.g. FIG. 19A).

"Accuracy tolerances" refer here to a maximum variation of the distances between optical elements and between mechanical elements. "Repeatability tolerances" refer here to a maximum variation of the distances between optical elements and between mechanical elements in different pop-out cycles, i.e. the capability of the mechanical and optical elements to return to their prior positions after one or many pop-out (or collapse) events.

Tolerances in the Y direction may be less important, as variations in Y can be compensated by optical feedback and moving the lens for auto-focus.

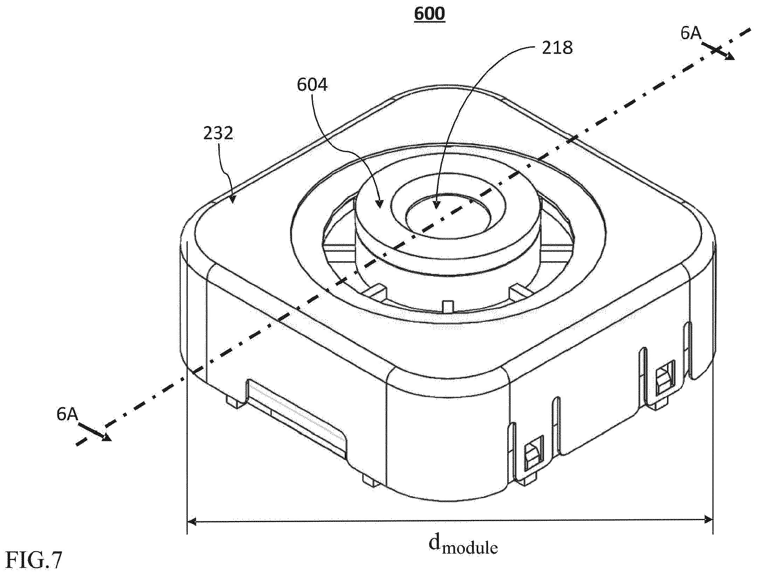

FIG. 4A shows in cross section optics module **240** in the pop-out state. FIG. 4B shows optics module **240** in the same state in perspective. The diameter of the smallest circle that entirely surrounds the optics module defines a "largest diameter" "$d_{module}$" of the optics module. That is "$d_{module}$" marks the largest diagonal of an optics module (here and in e.g. FIGS. 7, 17B, 18A, 18B, 18E and 19A) except when stated otherwise (e.g. as re. FIG. 16A).

FIG. 4C shows details of a first exemplary lens system **400** that can be used in camera **200** in a pop-out state. Lens system **400** comprises a lens **420** that includes, in order from an object side to an image side, a first lens element L1 with object-side surface S2 and image-side surface S3; a second lens element L2 with object-side surface S4, with an image side surface marked S5; a third lens element L3 with object-side surface S6 with image-side surface S7; a fourth lens element L4 object-side surface marked S8 and an image-side surface marked S9; a fifth lens element L5 with object-side surface marked S10 and an image-side surface marked S11; and a sixth lens element L6 with object-side surface marked S12 and an image-side surface marked S13. S1 marks a stop. Lens system **400** further comprises optical window **234** disposed between surface S13 and image sensor **208**. Distances between lens elements and other elements are given in tables below along an optical axis of the lens and lens system.

In lens system **400,** TTL = 11.55 mm, BFL = 5.96mm, EFL=13 mm, F number =2.20 and the FOV = 29.7 deg. A ratio of TTL/EFL = 0.89. The optical properties of lens **420** do not change when switching between a pop-out state and a collapsed state (i. e. gaps between lens elements are constant).

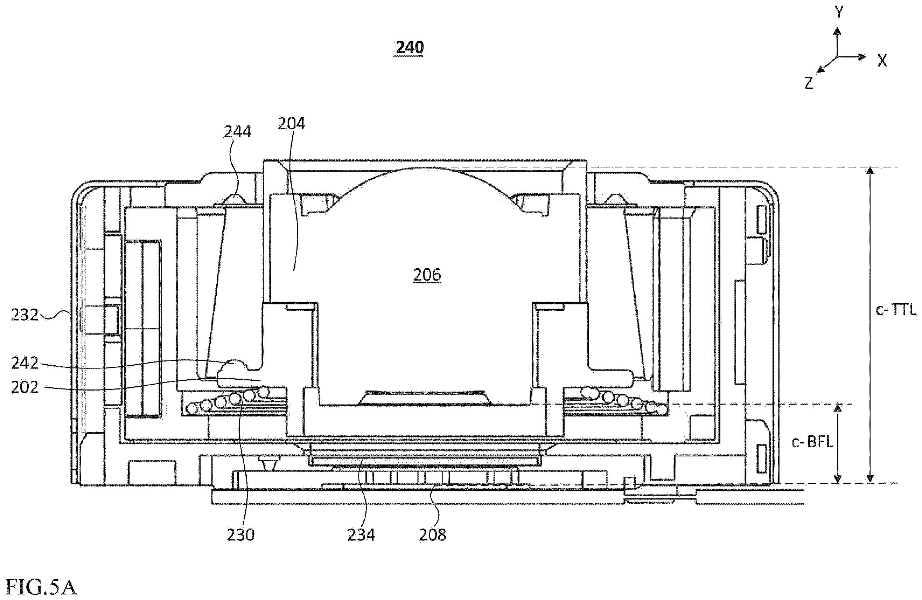

In the collapsed state (see FIG. 5A), cTTL may be 5.64-8.09 mm. The difference between cTTL and TTL stems from a modified BFL which is now a collapsed BFL, "c-BFL" (see FIG. 5A). c-BFL may be 0.051-2.5mm. All distances between lens elements L1-L6 and lens surfaces S2-S13 remain unchanged.

Detailed optical data of lens system **400** is given in Table 1, and the aspheric surface data is given in Table 2 and Table 3, wherein the units of the radius of curvature (R), lens element thickness and/or distances between elements along the optical axis and diameter are expressed in mm. "Index" is the refraction index. The equation of the aspheric surface profiles is expressed by:

$$(Eq.1) \; z(r) = \frac{cr^2}{1 + \sqrt{1 - (1+k)c^2 r^2}} + D_{con}(u)$$

$$D_{con}(u) = u^4 \sum_{n=0}^{N} A_n \, Q_n^{con}(u^2)$$

$$u = \frac{r}{r_{norm}}, x = u^2$$

$$Q_0^{con}(x) = 1 \quad Q_1^{con} = -(5 - 6x) \quad Q_2^{con} = 15 - 14x(3 - 2x)$$

$$Q_3^{con} = -\{35 - 12x[14 - x(21 - 10x)]\}$$

$$Q_4^{con} = 70 - 3x\{168 - 5x[84 - 11x(8 - 3x)]\}$$

$$Q_5^{con} = -[126 - x(1260 - 11x\{420 - x[720 - 13x(45 - 14x)]\})]$$

where {z, r} are the standard cylindrical polar coordinates, c=1/R is the paraxial curvature of the surface, k is the conic parameter, and $r_{norm}$ is generally one half of the surface's clear aperture. An are the polynomial coefficients shown in lens data Table 2 and Table 3 (as well as in Table 5 and Table 6, and in Table 10 and Table 11). The Z-axis is defined to be positive towards the image. Also note that in Table 1 (as well as in Table 4 and Table 9), the distances between various elements (and/or surfaces) refer to the element thickness and are measured on the optical axis Z, wherein the stop is at z = 0. Each number is measured from the previous surface. Thus, the first distance -1.197 mm is measured from the stop to surface S2. The reference wavelength is 555.0 nm. Units are in mm (except for refraction index "Index" and Abbe #). The largest lens diameter $d_L$ of a lens such as lens **240** is given by the largest diameter present among all the lens elements of a lens such as lens **240.**

Table 1

| Surface # | Comment | Type | Curvature Radius | Thickness | Aperture Radius (D/2) | Material | Index | Abbe # | Focal Length |
|---|---|---|---|---|---|---|---|---|---|
| Lens system **400** EFL=13.00 mm, F number =2.20, FOV = 29.7 deg. | | | | | | | | | |
| 1 | A.S | Plano | Infinity | -1.197 | 2.940 | | | | |
| 2 | Lens 1 | QT1 | 3.453 | 0.927 | 2.940 | Plastic | 1.54 | 56.18 | 14.80 |
| 3 | | | 5.463 | 0.008 | 2.895 | | | | |
| 4 | Lens 2 | QT1 | 4.054 | 1.545 | 2.811 | Plastic | 1.54 | 56.18 | 8.78 |
| 5 | | | 22.988 | 0.025 | 2.620 | | | | |
| 6 | Lens 3 | QT1 | 6.508 | 0.218 | 2.346 | Plastic | 1.67 | 19.4 | -9.67 |
| 7 | | | 3.215 | 1.134 | 2.003 | | | | |
| 8 | Lens 4 | QT1 | -9.074 | 0.206 | 1.774 | Plastic | 1.64 | 23.53 | -17.62 |
| 9 | | | -45.557 | 0.902 | 1.648 | | | | |
| 10 | Lens 5 | QT1 | 66.987 | 0.417 | 1.665 | Plastic | 1.67 | 19.44 | 9.93 |
| 11 | | | -7.435 | 0.009 | 1.788 | | | | |
| 12 | Lens 6 | QT1 | -19.713 | 0.197 | 1.845 | Plastic | 1.54 | 56.18 | -10.85 |
| 13 | | | 8.487 | 5.450 | 1.984 | | | | |
| 14 | Filter | Plano | Infinity | 0.210 | - | Glass | 1.52 | 64.2 | |
| 15 | | | Infinity | 0.300 | - | | | | |
| 16 | Image | Plano | Infinity | - | - | | | | |

Table 2

| Surface # | $R_{norm}$ | A0 | A1 | A2 | A3 |
|---|---|---|---|---|---|
| Aspheric Coefficients | | | | | |
| 2 | 2.385 | -6.99E-02 | -1.08E-02 | -1.52E-03 | -4.14E-04 |
| 3 | 2.385 | -6.86E-02 | -1.05E-02 | 2.44E-03 | -3.81E-04 |
| 4 | 2.385 | 9.39E-03 | -1.24E-02 | 2.84E-03 | 8.52E-04 |
| 5 | 2.385 | 1.26E-03 | -2.19E-02 | 1.12E-03 | 8.76E-04 |
| 6 | 1.692 | -5.76E-02 | 2.59E-02 | -4. 13E-03 | -2.03E-05 |
| 7 | 1.692 | -2.94E-02 | 3.95E-02 | -5.32E-03 | -6.02E-04 |
| 8 | 1.648 | 3.50E-01 | 8.82E-03 | -2.47E-03 | 6.30E-04 |
| 9 | 1.648 | 4.12E-01 | 2.61E-02 | 2.43E-03 | 2.06E-03 |
| 10 | 1.587 | -2.16E-01 | -3.53E-02 | -8.04E-03 | 4.41E-04 |
| 11 | 1.587 | -1.36E-01 | -2.45E-02 | -2.51E-03 | 1.25E-03 |
| 12 | 1.609 | -2.58E-01 | 2.37E-02 | -1.19E-03 | 2.12E-04 |
| 13 | 1.609 | -2.99E-01 | 2.60E-02 | -4.30E-03 | -2.04E-04 |

Table 3

| Surface # | A4 | A5 | A6 |
|---|---|---|---|
| 2 | -4.91E-05 | 6.04E-06 | -7.27E-07 |
| 3 | 8.15E-05 | -5.60E-05 | 6.51E-06 |
| 4 | 1.04E-04 | -1.60E-04 | 1.22E-05 |
| 5 | -4.30E-04 | 9.99E-05 | -1.20E-05 |
| 6 | 6.30E-05 | -4.83E-06 | 1.65E-07 |
| 7 | 2.23E-05 | 2.33E-05 | 2.32E-07 |
| 8 | -2.32E-04 | -1.73E-05 | -4.47E-05 |
| 9 | -4.98E-05 | -1.12E-04 | -7.34E-05 |
| 10 | 1.23E-04 | 1.53E-04 | 7. 13E-05 |
| 11 | -6.1 1E-04 | 1.56E-04 | 1.39E-05 |
| 12 | -5.99E-04 | 1.37E-04 | 7.47E-06 |
| 13 | 5.73E-05 | -1.33E-05 | 1.30E-06 |

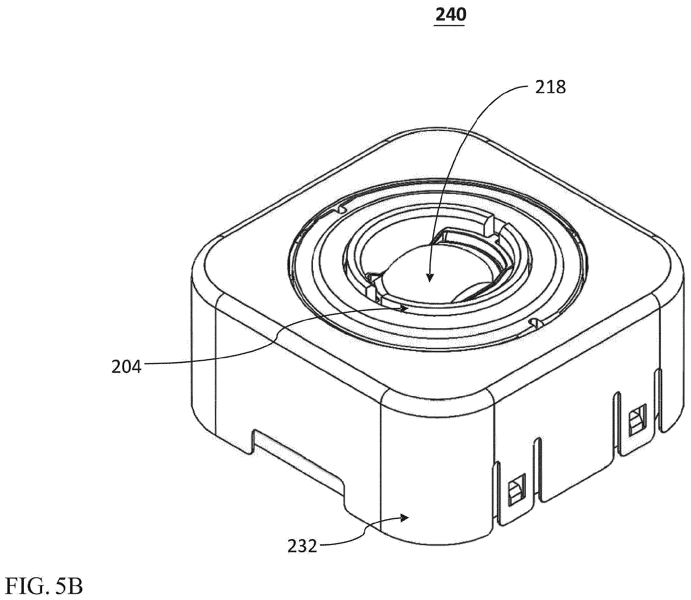

FIG. 5A shows a pop-out optics module **240** in a collapsed state in a cross sectional view. FIG. 5B shows a perspective view of the same.

FIG. 6A shows a cross sectional view (through cross section marked 6A-6A in FIG. 7) of another example numbered **600** of a pop-out optics module in a pop-out state. Optics module **600** may be integrated into a pop-out mechanism such as **210** (not shown here). Optics module **600** includes a lens barrel **602** with a collapsible lens barrel section (first barrel section) **604** carrying a first lens group **606,** and a fixed lens barrel section (second barrel section) **608** carrying a second lens group **610**. The two lens groups form a lens **620** that includes altogether N lens elements L1-LN, arranged with a first lens element L1 on an object side and a last lens element LN on an image side. Optics module **600** is covered by cover **232**. Lens **620,** and optional optical window **234** and an image sensor **208** form a lens system **630**.

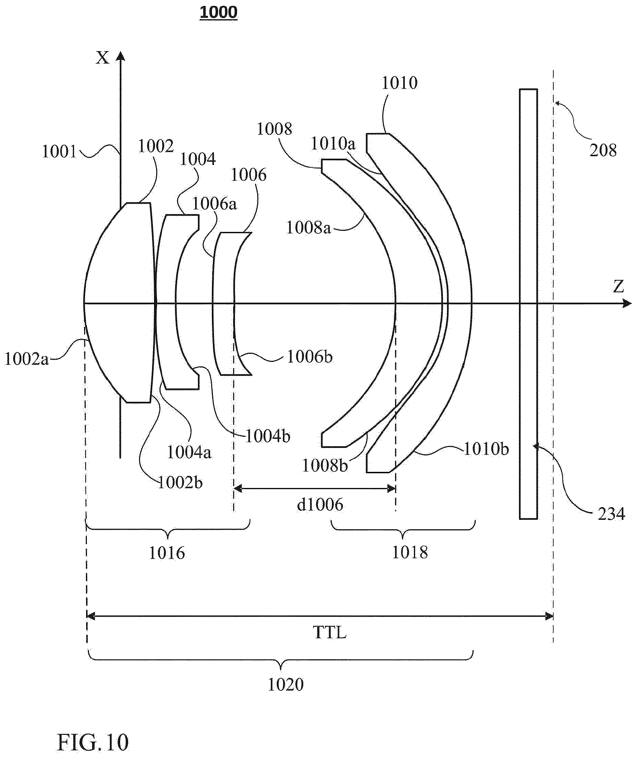

Exemplarily and as shown, in lens **620** N=6. In general, N $\geq$ 4. In other examples, the lens barrel may comprise more than two barrel sections with more lens groups each, e.g. 3, 4, 5 lens barrel sections with each barrel section carrying a lens group. The lens barrel sections may be divided into fixed barrel sections and movable barrel sections. In the example shown, first lens group **606** includes lenses L1-L5 and second lens group **610** includes lens L6. Air-gaps may be formed between lens groups according to their relative movement. In examples with more than two barrel sections, some or all barrel sections may be movable and have respective air-gaps formed between the lens groups. The air-gaps between lens groups may collapse in a non-operative camera state. The sum of such air-gaps may be 1-8.5mm. The largest air-gaps present between two consecutive lens elements may be used to define lens groups. For example, the largest air-gap present between two consecutive lens elements may be used to divide a lens into two lens groups, the largest air-gap and the second largest air-gap present between two consecutive lens elements may be used to define three lens groups, etc. This statement is true for all lens and camera examples below. In the pop-out state, air-gap $d_{N-1}$ may be 1-3.5mm. A spring **614** pushes the first lens barrel section **604** towards a window frame like frame **214**. In the operative state, stopper **618** and another stopper **618'** may act as a stopper mechanism that keeps the lens groups in fixed distance and orientation. In some examples, an camera in pop-out state disclosed herein may be designed to support tolerances for decenter of e.g. $\pm 20\mu m$ in the X-Z plane and of e.g. $\pm 10\mu m$ in the Y direction, as well as for a tilt of $\pm 0.2°$ of the lens barrel with respect to image sensor **208**. In other examples tolerances for decenter may be e.g. $\pm 3$-$10\mu m$ in the X-Z plane and of e.g. $\pm 3$-$10\mu m$ in the Y direction, as well as e.g. $\pm 0.05°$-$0.15°$ for a tilt of lens barrel with respect to the image sensor Y. In yet other examples, tolerances for decenter may be smaller than $1\mu m$ in the X-Z plane, e.g. $0.8 \mu m$. In yet other examples, tolerances for decenter in a Y plane may be smaller than $1\mu m$, e.g. $0.8 \mu m$, to support the properties of a lens system like system **630, 650** or **1000,** especially for air-gaps between lens elements such as $d_{N-1}$ (see FIG. 6C) or $d_{1006}$ (see FIG. 10). In some examples, pins such as pins **1208** (see FIG. 12B and FIG. 12D) may be used for providing mechanical stability and repeatability in X-Z plane.

The TTL of the lens, measured from the first (object side) surface of L1 to the image sensor may be 5-18mm. The image sensor diagonal may be 6mm < sensor diagonal < 30mm. The 35eqFL may be 15mm < equivalent focal length < 200mm. The TTL/EFL ratio may vary in the range 0.7 < TTL/EFL < 1.5.

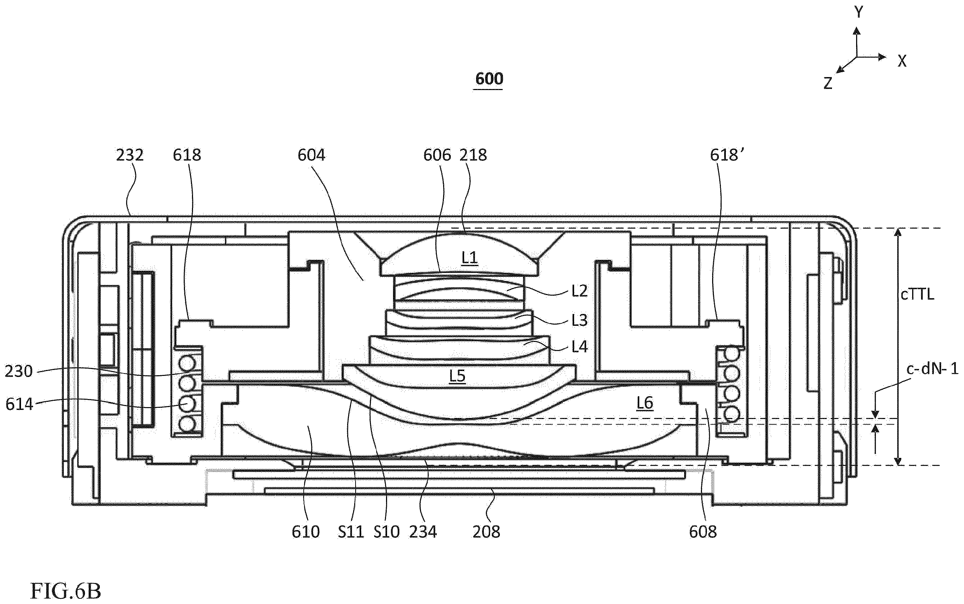

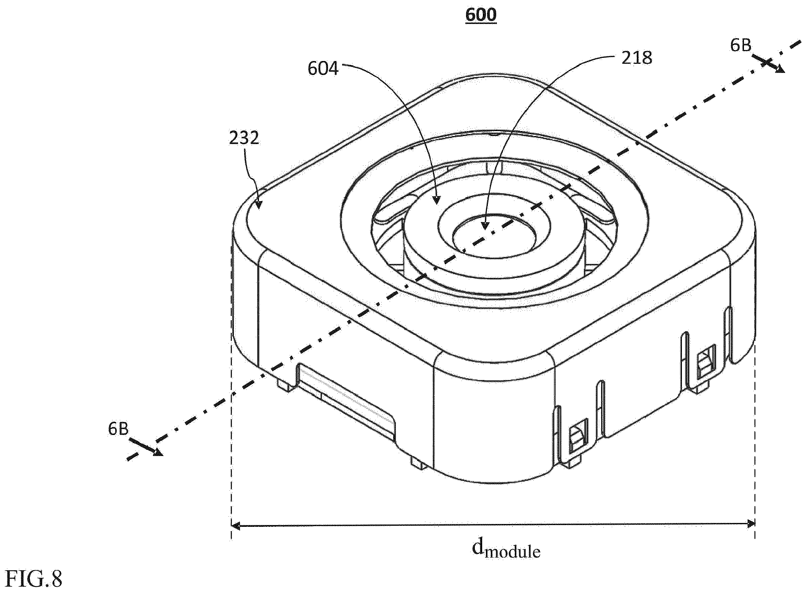

FIG. 6B shows a cross sectional view (through cross section marked 6B-6B in FIG. 8) of optics module **600** in a collapsed state. To switch optics module **600** to the collapsed state, actuator **212** decreases the air-gap between the first surface of LN and the second surface of LN-1 by moving the window frame (not shown here) to apply pressure to the lens barrel that translates into a movement of the collapsible lens barrel section towards the image sensor. In the collapsed state, cTTL may be 5-12mm, and collapsed air-gap c-$d_{N-1}$ may be 0.05-0.85mm. The difference between cTTL and TTL stems from a modified distance between the first lens group **606** in first collapsible lens barrel section **604** and second lens group **610** in second fixed lens barrel section **608**. The distance between first lens group **606** and the image sensor changed with respect to the pop-out state, but the distance between second lens group **610** and the image sensor did not change. The optical properties of lens **620** change when switching between a pop-out state and a collapsed state.

FIG. 6C shows an example of another lens system **650** that may be used in optics module **600** or another pop-out optics module **600'** below. Lens system **650** is shown in a pop-out state. The design data is given in Tables 4-6. Lens system **650** includes a lens **620'** with seven lens elements L1-L7 arranged as shown, optical window **234** and image sensor **208.** Lens elements L1-L6 form the first lens group **606,** and lens element L7 forms the second lens group **610.** The TTL is 8.49 mm and the BFL is 1.01mm. Focal length is EFL=6.75 mm, F number =1.80 and the FOV = 80.6 deg. Air-gap $d_{N-1}$ is 2.1mm.

Table 4

| Lens system **650** EFL=6.75 mm, F number =1.80, FOV = 80.6 deg. | | | | | | | | | |
|---|---|---|---|---|---|---|---|---|---|
| Surface # | Comment | Type | Curvature Radius | Thickness | Aperture Radius (D/2) | Material | Index | Abbe # | Focal Length |
| 1 | A.S | Plano | Infinity | -0.727 | 1.880 | | | | |
| 2 | Lens 1 | QT1 | 2.844 | 0.861 | 1.880 | Plastic | 1.54 | 55.9 | 7.55 |
| 3 | | | 8.156 | 0.128 | 1.797 | | | | |
| 4 | Lens 2 | QT1 | 6.089 | 0.250 | 1.769 | Plastic | 1.67 | 19.4 | -19.67 |
| 5 | | | 4.106 | 0.323 | 1.677 | | | | |
| 6 | Lens 3 | QT1 | 7.530 | 0.384 | 1.678 | Plastic | 1.54 | 55.9 | 26.14 |
| 7 | | | 15.633 | 0.489 | 1.685 | | | | |
| 8 | Lens 4 | QT1 | 19.241 | 0.257 | 1.726 | Plastic | 1.66 | 20.4 | -34.80 |
| 9 | | | 10.465 | 0.397 | 1.974 | | | | |
| 10 | Lens 5 | QT1 | -9.931 | 0.601 | 2.060 | Plastic | 1.57 | 37.4 | -6.53 |
| 11 | | | 6.067 | 0.187 | 2.315 | | | | |
| 12 | Lens 6 | QT1 | 4.294 | 0.738 | 2.725 | Plastic | 1.54 | 55.9 | 3.66 |
| 13 | | | -3.522 | 2.097 | 2.984 | | | | |
| 14 | Lens 7 | QT1 | -5.605 | 0.770 | 4.901 | Plastic | 1.54 | 55.9 | -5.10 |
| 15 | | | 5.824 | 0.188 | 5.579 | | | | |
| 16 | Filter | Plano | Infinity | 0.2100 | - | Glass | 1.52 | 64.2 | |
| 17 | | | Infinity | 0.610 | - | | | | |
| 18 | Image | Plano | Infinity | - | - | | | | |

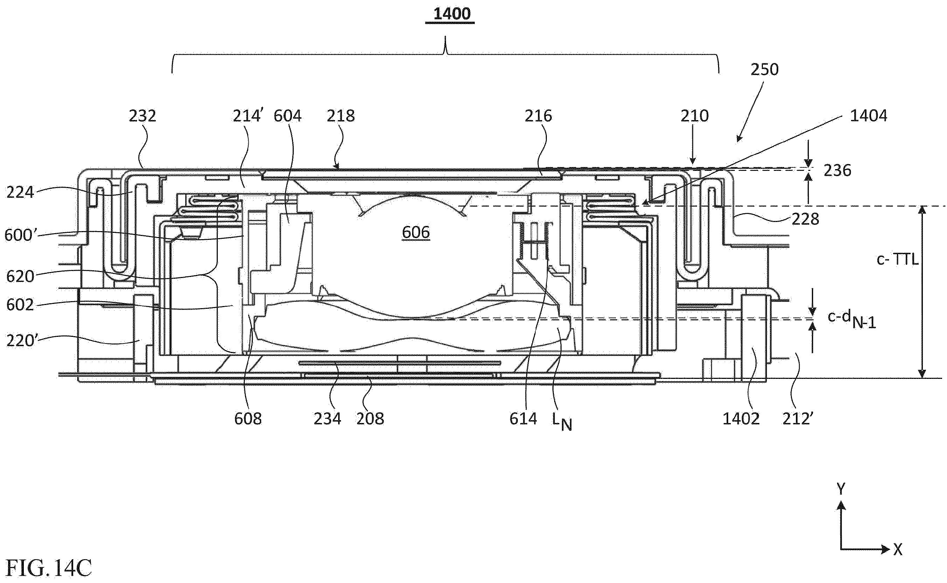

In the collapsed state (see FIG. 6B or FIG. 14C), cTTL may be 6.44-7.24 mm. The difference between cTTL and TTL stems from a modified air-gap between L6 and L7, which is a collapsed air-gap **c-$d_{N-1}$** and which may be 0.05-0.85mm. The BFL did not change with respect to the pop-out state.

The optical properties of lens **620'** change when switching between a pop-out state and the collapsed state. The optical properties presented here refer to the lens elements in a "maximal" pop-out state, i.e. when the lens has the largest TTL.

Table 5

| Surface # | $R_{norm}$ | A0 | A1 | A2 | A3 | A4 |
|---|---|---|---|---|---|---|
| | | | Aspheric Coefficients | | | |
| 2 | 2.03E+00 | 8.98E-02 | 1.91E-02 | 4.39E-03 | 8.23E-04 | 1.41E-04 |
| 3 | 1.88E+00 | 1.36E-02 | 1.31E-02 | 1.21E-03 | 2.44E-04 | 8.58E-05 |
| 4 | 1.87E+00 | -6.37E-02 | 3.51E-02 | 1.73E-03 | 6.81E-04 | 1.38E-04 |
| 5 | 1.85E+00 | -1.16E-02 | 5.94E-02 | 1.65E-02 | 6.10E-03 | 1.62E-03 |
| 6 | 1.85E+00 | -1.04E-01 | 1.94E-02 | 1.51E-02 | 4.62E-03 | 9.45E-04 |
| 7 | 1.78E+00 | -1.51E-01 | -4.96E-03 | 3.05E-03 | 1.05E-03 | 2.14E-04 |
| 8 | 1.78E+00 | -5.18E-01 | -1.59E-02 | 5.30E-03 | 2.48E-03 | 8.04E-04 |
| 9 | 2.10E+00 | -5.53E-01 | 7.15E-02 | 3.81E-02 | 1.81E-02 | 6.25E-03 |
| 10 | 2.30E+00 | -3.60E-01 | 2.33E-01 | 1.57E-01 | 1.29E-01 | 5.32E-02 |
| 11 | 2.42E+00 | -1.68E+00 | 1.98E-01 | -4.68E-03 | 5.58E-02 | 2.62E-02 |
| 12 | 2.59E+00 | -1.52E+00 | 8.24E-02 | -8.59E-03 | 1.18E-02 | 2.67E-04 |
| 13 | 2.86E+00 | 4.37E-01 | 2.30E-03 | 4.67E-02 | -1.08E-02 | -3.33E-03 |
| 14 | 5.06E+00 | 1.44E+00 | 5.66E-01 | -2.72E-01 | 1.01E-01 | -2.51E-02 |
| 15 | 5.55E+00 | -5.28E+00 | 5.59E-01 | -2.71E-01 | 4.18E-02 | -4.23E-02 |

Table 6

| Surface # | A5 | A6 | A7 | A8 | A9 |
|---|---|---|---|---|---|
| | | Aspheric Coefficients | | | |
| 2 | 0.00E+00 | 0.00E+00 | 0.00E+00 | 0.00E+00 | 0.00E+00 |
| 3 | -2.45E-05 | 0.00E+00 | 0.00E+00 | 0.00E+00 | 0.00E+00 |
| 4 | -7.03E-05 | 0.00E+00 | 0.00E+00 | 0.00E+00 | 0.00E+00 |
| 5 | 2.33E-04 | 0.00E+00 | 0.00E+00 | 0.00E+00 | 0.00E+00 |
| 6 | 5.32E-05 | 0.00E+00 | 0.00E+00 | 0.00E+00 | 0.00E+00 |
| 7 | 3.84E-05 | 0.00E+00 | 0.00E+00 | 0.00E+00 | 0.00E+00 |
| 8 | 3.66E-04 | 0.00E+00 | 0.00E+00 | 0.00E+00 | 0.00E+00 |
| 9 | 1.49E-03 | -2.63E-04 | 0.00E+00 | 0.00E+00 | 0.00E+00 |
| 10 | 1.64E-02 | 1.44E-03 | 0.00E+00 | 0.00E+00 | 0.00E+00 |
| 11 | 1.59E-02 | 3.54E-03 | 1.08E-03 | 0.00E+00 | 0.00E+00 |
| 12 | 3.18E-03 | -5.00E-04 | -3.15E-04 | 0.00E+00 | 0.00E+00 |
| 13 | 2.65E-03 | 2.67E-05 | -4.87E-04 | 1.84E-04 | 0.00E+00 |
| 14 | -2.21E-04 | -1.68E-05 | 6.75E-04 | -6.40E-04 | 2.77E-04 |
| 15 | 5.53E-03 | -7.30E-03 | -2.11E-04 | -1.38E-03 | 2.11E-04 |

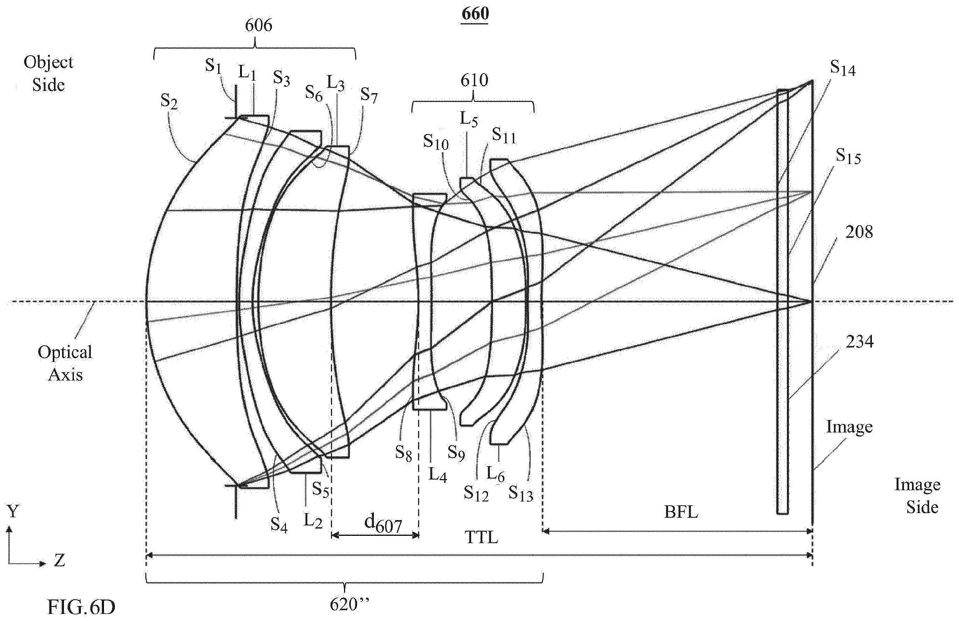

FIG. 6D shows an example of yet another lens system **660** that may be used in optics module **600** or **600'**. Lens system **660'** is shown in a pop-out state. The design data is given in Tables 7-9. Lens system **660** includes a lens **620"** with six lens elements L1-L6 arranged as shown, optical window **234** and image sensor **208**. Lens elements L1-L3 form the first lens group **606**, and lens elements L4-L6 form the second lens group **610**. The TTL is 13.5 mm and the BFL is 5.49mm. Focal length is EFL=15.15 mm, F number =2.0 and the FOV = 32.56 deg. Air-gap $d_{607}$ is 1.78mm. A ratio of TTL/EFL = 0.89.

In the collapsed state (see FIG. 6B), cTTL may be 5-11 mm. The difference between cTTL and TTL stems from a modified air-gap between L3 and L4, which is a collapsed air-gap $c\text{-}d_{607}$ and which may be 0.05-1.0mm and a modified BFL which is a c-BFL and may be 0.1-1. 5mm. The optical properties of lens **620"** change when switching between a pop-out state and the collapsed state. For lens system **660,** a ratio TTL/EFL is 0.89, i.e. EFL > TTL. The ratio cTTL/EFL may be 0.35-0.75.

Table 7

| | Lens system **660** EFL = 15.15 mm, F number = 2.0, FOV = 32.56 deg. | | | | | | | | |
|---|---|---|---|---|---|---|---|---|---|
| Surface # | Comment | Type | Curvature Radius | Thickness | Aperture Radius (D/2) | Material | Index | Abbe # | Focal Length |
| 1 | A.S | Plano | Infinity | -1.823 | 3.731 | | | | |
| 2 | Lens 1 | ASP | 4.314 | 1.837 | 3.731 | Plastic | 1.54 | 55.91 | 9.50 |
| 3 | | | 21.571 | 0.048 | 3.560 | | | | |
| 4 | Lens 2 | ASP | 4.978 | 0.265 | 3.419 | Plastic | 1.67 | 19.44 | -17.41 |
| 5 | | | 3.422 | 0.113 | 3.139 | | | | |
| 6 | Lens 3 | ASP | 5.764 | 1.473 | 3.113 | Plastic | 1.67 | 19.44 | 20.20 |
| 7 | | | 11.201 | 1.780 | 2.909 | | | | |
| 8 | Lens 4 | ASP | -6.075 | 0.260 | 2.143 | Plastic | 1.67 | 19.44 | -14.33 |
| 9 | | | -17.446 | 1.230 | 2.008 | | | | |
| 10 | Lens 5 | ASP | -18.298 | 0.688 | 2.264 | Plastic | 1.54 | 55.91 | 184.98 |
| 11 | | | -16.202 | 0.040 | 2.468 | | | | |
| 12 | Lens 6 | ASP | 10.235 | 0.273 | 2.679 | Plastic | 1.54 | 55.91 | -93.97 |
| 13 | | | 8.454 | 4.783 | 2.848 | | | | |
| 14 | Filter | Plano | Infinity | 0.210 | - | Glass | 1.52 | 64.17 | |
| 15 | | | Infinity | 0.500 | - | | | | |
| 16 | Image | Plano | Infinity | - | - | | | | |

Table 8

| | Aspheric Coefficients | | | | |
|---|---|---|---|---|---|
| Surface # | Conic | A4 | A6 | A8 | A10 |
| 2 | 0 | -4.57E-04 | -5.55E-05 | 2.46E-05 | -4.65E-06 |
| 3 | 0 | 8.55E-04 | 7.37E-04 | -1.07E-04 | 9.78E-06 |
| 4 | 0 | -1.51E-02 | 3.43E-03 | -6.33E-04 | 8.54E-05 |
| 5 | 0 | -2.21E-02 | 5.71E-03 | -1.50E-03 | 2.85E-04 |
| 6 | 0 | -3.61E-03 | 3.56E-03 | -1.08E-03 | 2.29E-04 |
| 7 | 0 | -1.74E-04 | 2.47E-04 | 5.66E-05 | -3.21E-05 |
| 8 | 0 | 1.75E-02 | 2.27E-03 | -2.24E-03 | 7.99E-04 |
| 9 | 0 | 1.79E-02 | 5.45E-03 | -3.71E-03 | 1.37E-03 |
| 10 | 0 | -4.37E-03 | -1.59E-02 | 1.33E-02 | -6.54E-03 |

(continued)

| Aspheric Coefficients | | | | | |
|---|---|---|---|---|---|
| Surface # | Conic | A4 | A6 | A8 | A10 |
| 11 | 0 | -7.77E-02 | 4.02E-02 | -1.21E-02 | 1.65E-03 |
| 12 | 0 | -1.39E-01 | 7.50E-02 | -2.44E-02 | 4.78E-03 |
| 13 | 0 | -5.32E-02 | 1.90E-02 | -4.73E-03 | 6.11E-04 |

Table 9

| Aspheric Coefficients | | | |
|---|---|---|---|
| Surface # | A12 | A14 | A16 |
| 2 | 4.92E-07 | -2.88E-08 | 5.71E-10 |
| 3 | -6.44E-07 | 1.90E-08 | -1.21E-10 |
| 4 | -6.96E-06 | 3.18E-07 | -6.61E-09 |
| 5 | -3.28E-05 | 2.13E-06 | -6.25E-08 |
| 6 | -2.83E-05 | 1.87E-06 | -5.35E-08 |
| 7 | 5.30E-06 | -4.54E-07 | 1.54E-08 |
| 8 | -1.70E-04 | 1.94E-05 | -9.28E-07 |
| 9 | -2.64E-04 | 2.29E-05 | -1.78E-07 |
| 10 | 1.83E-03 | -2.76E-04 | 1.73E-05 |
| 11 | -8.43E-06 | -2.54E-05 | 2.18E-06 |
| 12 | -5.86E-04 | 4.30E-05 | -1.42E-06 |
| 13 | -2.86E-05 | -1.51E-06 | 1.53E-07 |

FIG. 7 shows a perspective view of optics module **600** in a pop-out state. FIG. 8 shows a perspective view of optics module **600** in a collapsed state.

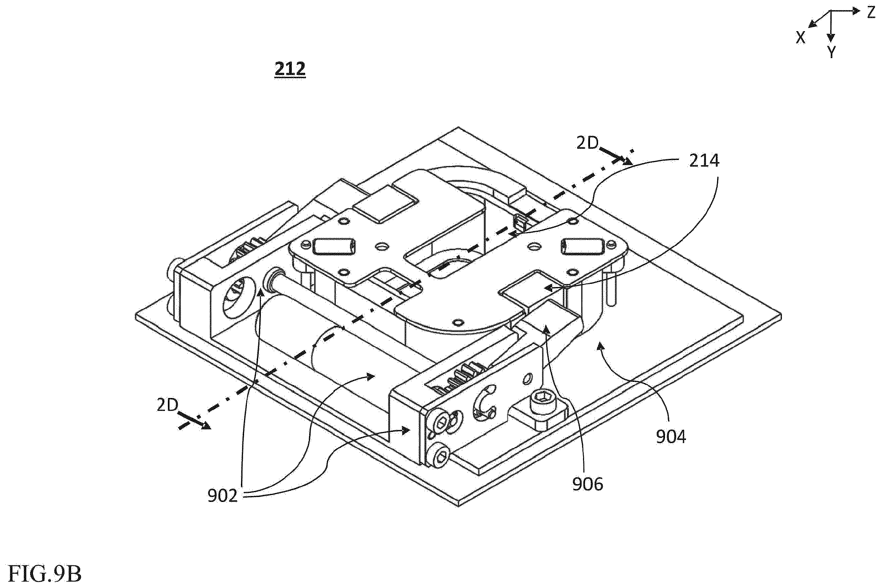

FIG. 9A shows a perspective view of actuator **212** in a pop-out state. FIG. 9B shows a perspective view of actuator **212** in a collapsed state. Cross sections 2B-2B and 2D-2D refer to respectively FIGS. 2B and 2D. Actuator **212** comprises a pop-out actuator **902** with moving parts for actuation. A pop-out actuator - window frame coupling **904** with a switch **906** translates the pop-out actuation to a movement of the window frame. Switch **906** couples actuator **902** with window frame **214.** As indicated above, the window frame movement is used to switch the camera to the collapsed state. In FIG. 9A, switch **906** is "down" to provide the pop-out state. In FIG. 9B, switch **906** is "up" to provide the collapsed state.

FIG. 10 shows another lens system numbered **1000** that can be included in a pop-out Tele camera in a maximal pop-out state. Lens system **1000** includes a lens **1020** with five lens elements as shown, optical window **234** and image sensor **208.** The Tele pop-out camera with lens system **1000** may be incorporated in a host device (e.g. a smartphone, tablet, etc., not shown here). Similar to the shown in FIG. 6A and FIG. 6B, in lens system **1000** switching between the pop-out and the collapsed states is obtained by modifying an air-gap **d1006** between a first lens group **1016** and a second lens group **1018.**

In lens system **1000,** a first lens group **1016** includes lens elements **1002, 1004** and **1006** and a second lens group **1018** includes lens elements **1008** and **1010.** In the pop-out state, air-gap **d1006** between surface **1008a** of lens element **1008** and surface **1006b** of the immediately preceding lens element **1006** is 2.020mm (see Table 10). The TTL of the lens system is 5.904 mm. The division into a first lens group and a second lens group is done according to the largest air-gap between two consecutive lens elements.

Lens system **1000** may provide a FOV of 25-50 degrees, and EFL = 6.9 mm, a F number = 2.80 and a TTL = 5.904 mm. The ratio TTL/EFL is 0.86, i.e. EFL > TTL. The ratio cTTL/EFL may be 0.58-0.69. For air-gap d1006 = TTL/2.95, so d1006 > TTL/3. In other examples, for a largest air-gap that divides the lens elements into first and a second lens groups the air-gap may fulfill air-gap >TTL/5 and EFL > TTL.

The optical properties of lens system **1000** change when switching to the collapsed state (not shown). In the collapsed state, cTTL may be 3.97-10 mm and collapsed air-gap **c-d1006** may be 0.05-0.85mm. The difference between cTTL and TTL stems from a modified distance between first lens group **1016** and second lens group **1018.** The distance between first lens group **1016** and image sensor **208** changed with respect to the pop-out state, but distance between second lens group **1016** and the image sensor **1014** did not change.

In lens system **1000,** all lens element surfaces are aspheric. Detailed optical data is given in Table 10, and the aspheric surface data is given in Table 11, wherein the units of the radius of curvature (R), lens element thickness and/or distances between elements along the optical axis and diameter are expressed in mm. "Nd" is the refraction index. The equation of the aspheric surface profiles is expressed by:

$$z = \frac{cr^2}{1 + \sqrt{1 - (1+k)c^2 r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14}.$$

where r is distance from (and perpendicular to) the optical axis, k is the conic coefficient, c = 1/R where R is the radius of curvature, and $\alpha$ are coefficients given in Table 2. In the equation above as applied to examples of a lens assembly disclosed herein, coefficients $\alpha_1$ and $\alpha_7$ are zero. Note that the maximum value of r "max r" = Diameter/2. Also note that Table 1 the distances between various elements (and/or surfaces) are marked "Lmn" (where *m* refers to the lens element number, *n* =1 refers to the element thickness and *n* = 2 refers to the air-gap to the next element) and are measured on the optical axis z, wherein the stop is at z = 0. Each number is measured from the previous surface. Thus, the first distance -0.466 mm is measured from the stop to surface **1002a,** the distance L11 from surface **1002a** to surface **1002b** (i.e. the thickness of first lens element **1002**) is 0.894 mm, the gap L12 between surfaces **1002b** and **1004a** is 0.020 mm, the distance L21 between surfaces **1004a** and **1004b** (i.e. thickness d2 of second lens element **1004)** is 0.246 mm, etc. Also, L21 = $d_2$ and L51 = $d_5$.

Table 10

| | Lens system **1000** EFL = 6.9 mm, F number = 2.80, FOV = 44 degrees | | | | |
|---|---|---|---|---|---|
| # | Comment | Radius R [mm] | Distances [mm] | Nd/Vd | Diameter [mm] |
| 1 | Stop | Infinite | -0.466 | | 2.4 |
| 2 | L11 | 1.5800 | 0.894 | 1.5345/57.095 | 2.5 |
| 3 | L12 | -11.2003 | 0.020 | | 2.4 |
| 4 | L21 | 33.8670 | 0.246 | 1.63549/23.91 | 2.2 |
| 5 | L22 | 3.2281 | 0.449 | | 1.9 |
| 6 | L31 | -12.2843 | 0.290 | 1.5345/57.095 | 1.9 |
| 7 | L32 | 7.7138 | 2.020 | | 1.8 |
| 8 | L41 | -2.3755 | 0.597 | 1.63549/23.91 | 3.3 |
| 9 | L42 | -1.8801 | 0.068 | | 3.6 |
| 10 | L51 | -1.8100 | 0.293 | 1.5345/57.095 | 3.9 |
| 11 | L52 | -5.2768 | 0.617 | | 4.3 |
| 12 | | Infinite | 0.410 | | 3.0 |

Table 11

| # | Conic coefficient k | $\alpha_2$ | $\alpha_3$ | $\alpha_4$ | $\alpha_5$ | $\alpha_6$ |
|---|---|---|---|---|---|---|
| 2 | -0.4668 | 7.9218E-03 | 2.3146E-02 | -3.3436E-02 | 2.3650E-02 | -9.2437E-03 |
| 3 | -9.8525 | 2.0102E-02 | 2.0647E-04 | 7.4394E-03 | -1.7529E-02 | 4.5206E-03 |
| 4 | 10.7569 | -1.9248E-03 | 8.6003E-02 | 1.1676E-02 | -4.0607E-02 | 1.3545E-02 |

(continued)

| # | Conic coefficient k | $\alpha_2$ | $\alpha_3$ | $\alpha_4$ | $\alpha_5$ | $\alpha_6$ |
|---|---|---|---|---|---|---|
| 5 | 1.4395 | 5.1029E-03 | 2.4578E-01 | -1.7734E-01 | 2.9848E-01 | -1.3320E-01 |
| 6 | 0.0000 | 2.1629E-01 | 4.0134E-02 | 1.3615E-02 | 2.5914E-03 | -1.2292E-02 |
| 7 | -9.8953 | 2.3297E-01 | 8.2917E-02 | -1.2725E-01 | 1.5691E-01 | -5.9624E-02 |
| 8 | 0.9938 | -1.3522E-02 | -7.0395E-03 | 1.4569E-02 | -1.5336E-02 | 4.3707E-03 |
| 9 | -6.8097 | -1.0654E-01 | 1.2933E-02 | 2.9548E-04 | -1.8317E-03 | 5.0111E-04 |
| 10 | -7.3161 | -1.8636E-01 | 8.3105E-02 | -1.8632E-02 | 2.4012E-03 | -1.2816E-04 |
| 11 | 0.0000 | -1.1927E-01 | 7.0245E-02 | -2.0735E-02 | 2.6418E-03 | -1.1576E-04 |

Advantageously, the Abbe number of the first, third and fifth lens element is 57.095. Advantageously, the first air-gap between lens elements **1002** and **1004** (the gap between surfaces **1002b** and **1004a)** has a thickness (0.020 mm) which is less than a tenth of thickness $d_2$ (0.246 mm). Advantageously, the Abbe number of the second and fourth lens elements is 23.91. Advantageously, the third air-gap between lens elements **1006** and **1008** has a thickness (2.020 mm) greater than TTL/5 (5.904/5 mm). Advantageously, the fourth air-gap between lens elements **108** and **110** has a thickness (0.068 mm) which is smaller than ds/2 (0.293/2 mm).

The focal length (in mm) of each lens element in lens system **1000** is as follows: f1 = 2.645, f2 = -5.578, f3 = -8.784, f4 = 9.550 and f5 = -5.290. The condition 1.2x|f3| > |f2| < 1.5xf1 is clearly satisfied, as 1.2x8.787 > 5.578 > 1.5x2.645. f1 also fulfills the condition f1 < TTL/2, as 2.645 < 2.952.

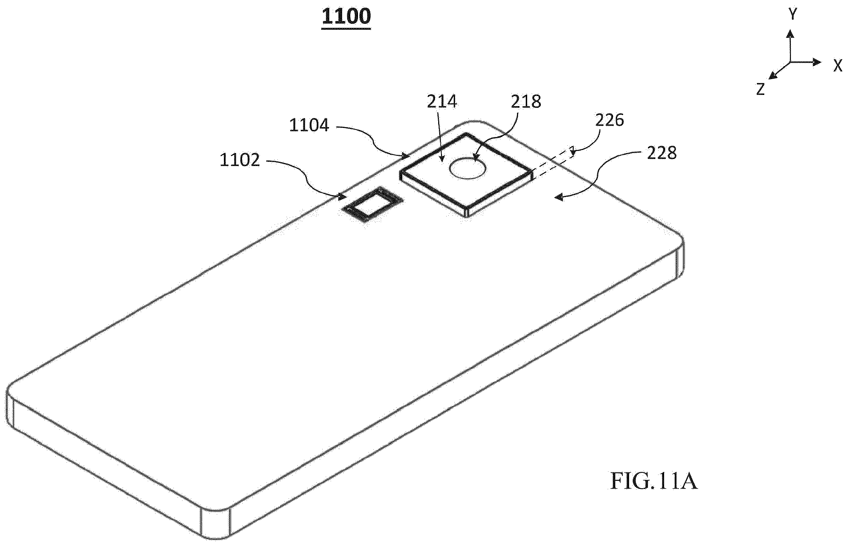

FIG. 11A shows an example of a host device **1100** such as a smartphone with a dual-camera comprising a regular (non pop-up) folded Tele camera **1102** and a Wide pop-out camera **1104.** The Wide camera **1104** is in an operative pop-out state and extends the device's exterior surface **228.** Bump **226** is visible. A large image sensor such as **208** (not visible here) and a pop-out frame such as frame **220** (not fully visible here) required for switching between a collapsed and a pop-out camera state define a minimum area of the device's exterior surface **228** that is covered by the pop-out camera (in X-Z). The minimum pop-out camera area may be larger than that of folded Tele cameras or that of regular (i.e. non pop-out) upright Wide cameras that are typically included in a device.

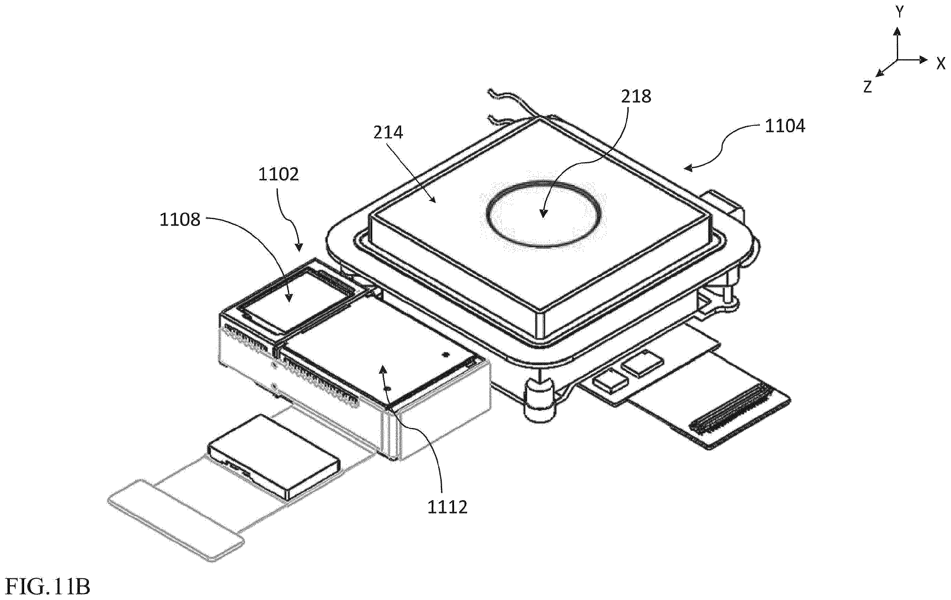

FIG. 11B shows details of folded Tele camera **1102** and the upright Wide camera **1104** in a pop out state. The folded Tele camera comprises a prism **1108** and a folded Tele lens and sensor module **1112.** In FIG. 11A and FIG. 11B only prism **1108** is visible.

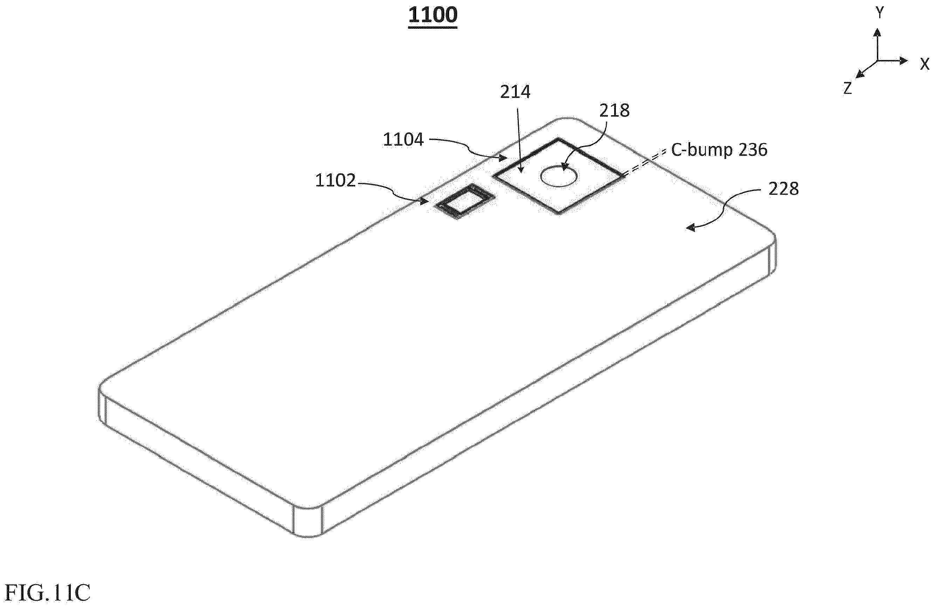

FIG. 11C shows host device **1100** with Wide camera **1104** in a collapsed state, illustrating the small height of the c-bump.

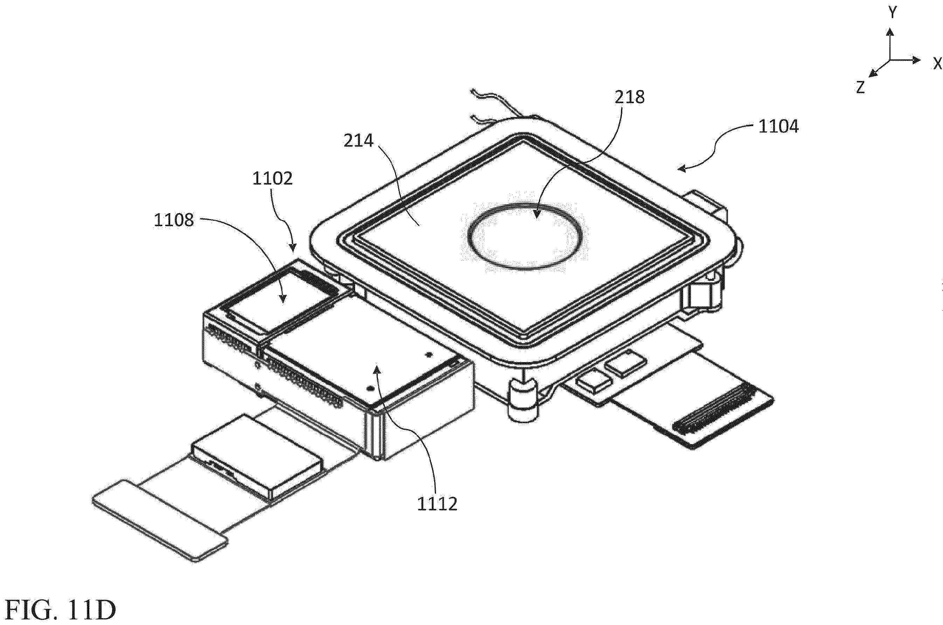

FIG. 11D shows details of the folded Tele camera and the upright Wide camera in a collapsed state.

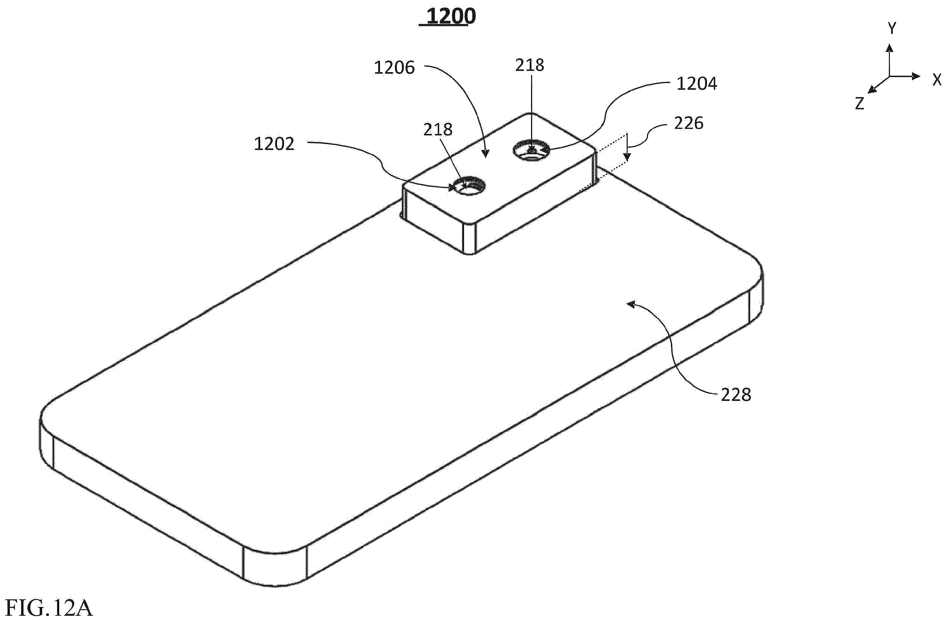

FIG. 12A shows another example of a host device **1200** such as a smartphone with a dual-camera comprising a Tele pop-out camera **1202** as disclosed herein and a Wide pop-out camera **1204** in an operative pop-out state. Pop-out bump **226** is visible. A pop-out mechanism cover **1206** covers both the Tele and the Wide camera. A frame like **220** (not shown) switches the Tele and the Wide camera between a pop-out state and a collapsed state together and simultaneously. Pins **1208** may provide mechanical stability and repeatability in the X-Z plane. In some examples, 2 pins may be included. In other examples, 3 or more pins may be used.

FIG. 12B shows details of upright Tele camera **1202** and upright Wide camera **1204,** with both cameras in the pop-out state.

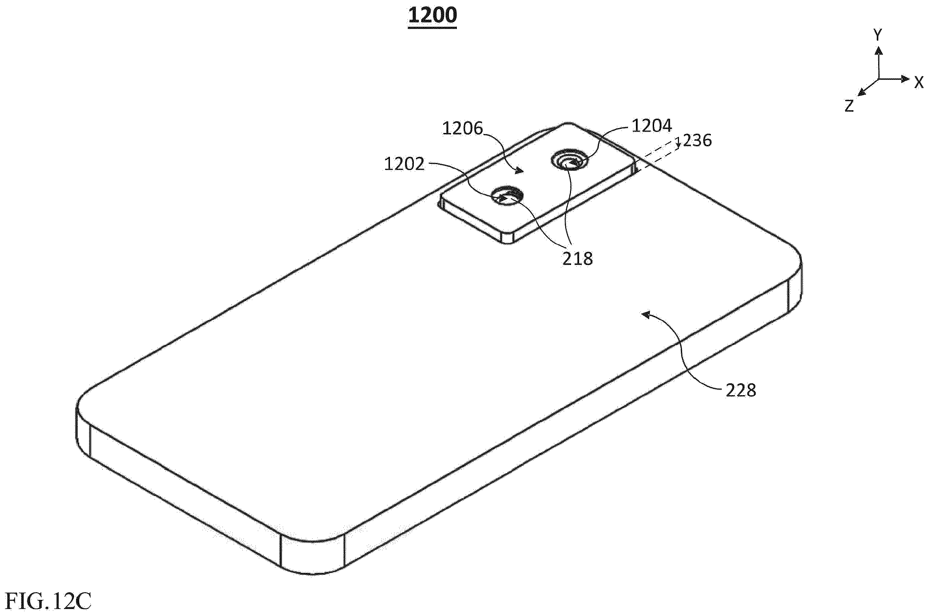

FIG. 12C shows host device **1200** with the cameras in a collapsed state. A c-bump **236** is shown. FIG. 12E shows details of upright Tele camera **1202** and upright Wide camera **1204,** with both cameras in the collapsed state.

FIG. 13 shows yet another example of a lens system numbered **1300** comprising a lens **1320** including seven lens elements L1-L7, optionally optical window **234,** and an image sensor **208.** Here, image sensor **208** is a curved image sensor, meaning that its light collecting surface is curved with a radius of curvature R = -19.026 mm wherein the "-" sign refers to a curvature with center at the object side of the image sensor. Use of a curved image sensor may be beneficial as undesired effects such as field curvature and shading toward the sensor edges may be less than for a planar image sensor. Lens system **1300** may be used in a camera such camera **200** in a pop-out state. The design data is given in Tables 12-14.

In lens system **1300,** TTL = 8.28mm, BFL = 3.24mm, EFL=6.95mm, F number =1. 85 and the FOV = 80.52 deg.

In the collapsed state (see FIG. 2C), cTTL may be 6.54-10 mm. The difference between cTTL and TTL stems from a modified BFL which is now a collapsed "c-BFL" (see FIG. 5A). c-BFL may be 1.494-2.5mm. The optical properties of lens **1320** do not change when switching between a pop-out state and a collapsed state (i. e. all distances between the lens elements L1-L7 and the lens surfaces S2-S15 did not change).

Table 12

| Lens system **1300** | | | | | | | | | |
|---|---|---|---|---|---|---|---|---|---|
| EFL=6.95mm, F number =1.85, FOV = 80.52 deg. | | | | | | | | | |
| Surface # | Comment | Type | Curvature Radius | Thickness | Aperture Radius (D/2) | Material | Index | Abbe # | Focal Length |
| | A.S | Plano | Infinity | -0.681 | 1.879 | | | | |
| | Lens 1 | QT1 | 2.791 | 0.577 | 1.879 | Plastic | 1.54 | 55.9 | 11.01 |
| | | | 4.824 | 0.426 | 1.824 | | | | |
| | Lens 2 | QT1 | 5.964 | 0.244 | 1.824 | Plastic | 1.67 | 19.4 | -12.73 |
| | | | 3.463 | 0.005 | 1.795 | | | | |
| | Lens 3 | QT1 | 3.871 | 0.959 | 1.814 | Plastic | 1.54 | 55.9 | 7.85 |
| | | | 35.947 | 0.452 | 1.783 | | | | |
| | Lens 4 | QT1 | -134.398 | 0.458 | 1.812 | Plastic | 1.66 | 20.37 | 63.02 |
| | | | -32.072 | 0.342 | 2.004 | | | | |
| | Lens 5 | QT1 | -4.466 | 0.252 | 2.096 | Plastic | 1.57 | 37.4 | -10.23 |
| | | | -19.576 | 0.286 | 2.280 | | | | |
| | Lens 6 | QT1 | 7.072 | 0.364 | 2.336 | Plastic | 1.54 | 55.9 | 3.95 |
| | | | -3.047 | 0.203 | 2.714 | | | | |
| | Lens 7 | QT1 | -7.929 | 0.478 | 3.717 | Plastic | 1.54 | 55.9 | -5.59 |
| | | | 5.074 | 1.744 | 4.108 | | | | |
| | Filter | Plano | Infinity | 0.2100 | - | Glass | 1.52 | 64.2 | |
| | | | Infinity | 1.284 | - | | | | |
| | Image | Plano | -19.026 | - | - | | | | |

Table 13

| Aspheric Coefficients | | | | | |
|---|---|---|---|---|---|
| Surface # | $R_{norm}$ | A0 | A1 | A2 | A3 |
| 2 | 2.170 | 6.97E-02 | 6.81E-02 | 4.19E-02 | 1.88E-02 |
| 3 | 2.170 | 1.92E-01 | 1.54E-01 | 7.45E-02 | 2.62E-02 |
| 4 | 1.891 | -1.23E-01 | 2.32E-02 | -4.13E-04 | -3.43E-04 |
| 5 | 1.891 | -1.59E-01 | 2.59E-02 | -6.88E-03 | -1.68E-03 |
| 6 | 1.891 | -3.55E-03 | 3.14E-02 | 3.10E-03 | 1.53E-03 |
| 7 | 1.891 | -4.64E-02 | 2.24E-02 | 1.31E-02 | 5.48E-03 |
| 8 | 2.225 | -5.98E-01 | 1.18E-01 | 8.64E-02 | 1.98E-02 |
| 9 | 2.225 | -4.13E-01 | 9.40E-02 | 1.01E-01 | 5.25E-02 |
| 10 | 2.670 | -3.70E-01 | -1.57E-01 | -7.49E-02 | 3.70E-02 |
| 11 | 2.670 | -6.73E-01 | 2.51E-01 | -1.90E-01 | -1.12E-02 |
| 12 | 3.671 | -3.40E+00 | 9.02E-01 | -4.45E-01 | 5.39E-02 |

(continued)

| Aspheric Coefficients | | | | | |
|---|---|---|---|---|---|
| Surface # | $R_{norm}$ | A0 | A1 | A2 | A3 |
| 13 | 3.671 | 3.45E+00 | 5.97E-02 | -2.00E-01 | -2.88E-02 |
| 14 | 5.340 | 2.76E+00 | 7.29E-02 | 5.26E-04 | -1.83E-01 |
| 15 | 5.340 | -6.08E+00 | 7.69E-02 | -7.67E-01 | -1.27E-01 |

Table 14

| Aspheric Coefficients | | | | | |
|---|---|---|---|---|---|
| Surface # | A4 | A5 | A6 | A7 | A8 |
| 2 | 6.08E-03 | 1.29E-03 | 1.49E-04 | 0.00E+00 | 0.00E+00 |
| 3 | 6.42E-03 | 1.10E-03 | 1.85E-04 | 0.00E+00 | 0.00E+00 |
| 4 | -6.39E-04 | -2.45E-04 | -7.91E-05 | 0.00E+00 | 0.00E+00 |
| 5 | -1.32E-03 | -9.94E-06 | 1.50E-04 | 0.00E+00 | 0.00E+00 |
| 6 | -4.90E-05 | 3.53E-04 | 2.69E-04 | 0.00E+00 | 0.00E+00 |
| 7 | 2.07E-03 | 6.57E-04 | 1.36E-04 | 0.00E+00 | 0.00E+00 |
| 8 | 3.42E-04 | -1.45E-03 | -8.99E-04 | 0.00E+00 | 0.00E+00 |
| 9 | 1.74E-02 | 5.33E-03 | 4.89E-04 | 0.00E+00 | 0.00E+00 |
| 10 | -3.53E-02 | -1.64E-02 | -1.34E-02 | 0.00E+00 | 0.00E+00 |
| 11 | -4.40E-02 | -4.87E-03 | -1.09E-02 | 0.00E+00 | 0.00E+00 |
| 12 | -1.00E-02 | -3.74E-02 | -5.14E-02 | 9.87E-03 | 1.02E-02 |
| 13 | -2.41E-02 | 5.41E-02 | 4.32E-02 | 1.11E-02 | 7.56E-03 |
| 14 | -2.94E-01 | -1.73E-01 | -8.86E-02 | -1.66E-02 | -2.06E-03 |
| 15 | -1.78E-01 | -7.01E-02 | -5.97E-02 | -2.09E-02 | -8.43E-03 |

In other examples, optical window **234** may be curved. A radius of curvature $R_W$ of the optical window may be of same sign as the radius of curvature R of curved image sensor **208** (i.e. with a center at the object side of the optical window) and may be curved in a similar way, so $R_W$ may e.g. be $R_W$ = -15 to -25 mm. In another example may be $R_W$ = R, with R being radius of curvature of the curved image sensor. This may allow for a smaller cTTL. cTTL may be 5.64-7.54 mm and c-BFL may be 0.594-2.5mm.

FIG. 14A shows in cross sectional view another example numbered **1400** of a pop-out camera disclosed herein in a pop-out state and incorporated in a "host" device **250** (e.g. a smartphone, tablet, etc.). Camera **1400** comprises a pop-out frame **220'** and an optics module **600'** that includes a lens **620**. As shown in FIG. 14B, frame **220'** comprises a window frame **214',** a cam follower **1402** and a side limiter **1406**. Cam follower **1402** is coupled via springs **1408** to a pop-out actuator **1408**. Optics module **600'** includes a lens barrel **602** with a collapsible lens barrel section (first barrel section) **604** carrying a first lens group **606,** and a fixed lens barrel section (second barrel section) **608** carrying a second lens group **610**. The two lens groups form a lens **620** that includes altogether N lens elements L1-LN, arranged with a first lens element L1 on an object side and a last lens element LN on an image side. Lens **620,** an optional optical window **234** and image sensor **208** form a lens system **630**.

Camera **1400** comprises an external module seal **224** and an internal module seal **1404**. External seal **224** prevents particles and fluids from entering device **250**. Seal **224** may support a IP68 class ranking of device **250**. Internal seal **1404** prevents particles from entering optics module **600'**.

"External" and "internal" refer to the fact that seal **224** prevents contamination of the camera from outside the host device, while seal **1404** prevents contamination of the camera from inside the host device.

Optics module **600'** and window frame **214** form an air-gap **222'** between the lens barrel and window **216**, which may be for example 0.1mm-3mm. Air-gap **222'** allows for a movement of the lens barrel by 0.1-3mm for performing auto-focus (AF) and optical image stabilization (OIS) by moving lens **620** or parts of lens **620** or optics module **600'** or sensor **208** as known in the art.

Camera **1400** forms a significant pop-out bump **226** with respect to an exterior surface **228** of device **250.** Here, "significant" may be for example 1.5mm-12mm. In the pop-out state, camera **1400** increases the height of host device **250** to a height in a pop-out state.

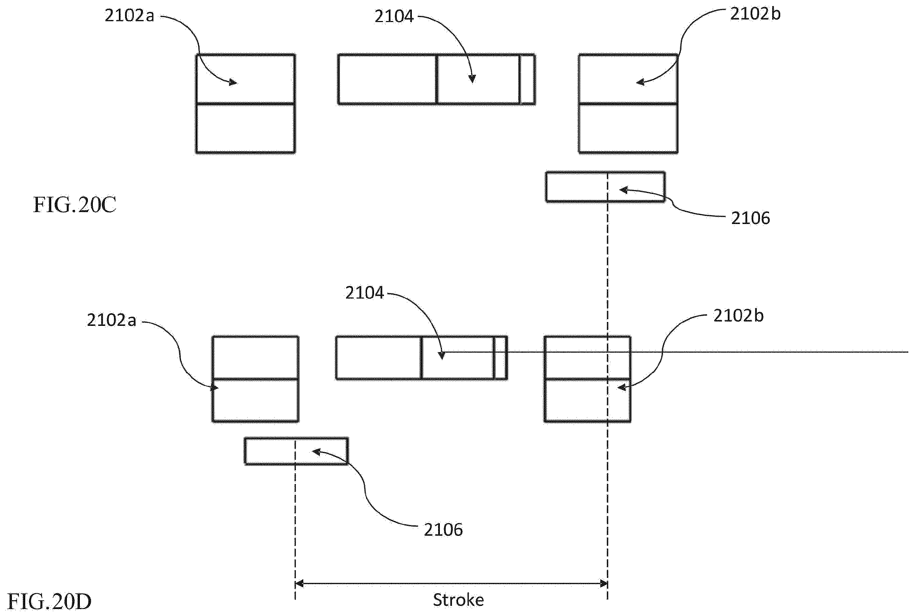

Lens **620** may have N ≥ 4 lens elements, and, as mentioned, comprises a barrel with two lens barrel sections. In other examples, the lens barrel may comprise more than two barrel sections with more lens groups, e.g. 3, 4, 5 lens barrel sections with each barrel section carrying a lens group. The lens barrel sections may be divided into fixed barrel sections and movable barrel sections. In the example shown, first lens group **606** includes lenses L1 - LN-1 and second lens group **610** includes lens LN (see FIG. 14A). Air-gaps may be formed between lens groups according to their relative movement. In examples with more than two barrel sections, some or all barrel sections may be movable and have respective air-gaps formed between the lens groups. The air-gaps between lens groups may collapse in a non-operative camera state. The sum of such air-gaps may be 1-12mm. In the pop-out state, air-gap $d_{N-1}$ may be 1-5.5mm. Three springs **614** (not all visible here) push first lens barrel section **604** towards a mechanical stop. The mechanical stop may be provided by a kinematic coupling mechanism as shown in FIG. 18A-B and FIG. 19A-B. In other examples and as shown in FIG. 20C, the mechanical stop may be provided by a top cover 1606'. In some examples, the camera in pop-out state may be designed to support tolerances for decenter of e.g. ±20μm in the X-Z plane and of e.g. ±10μm in the Y direction, as well as a tilt of ±0.2° of the lens barrel with respect to image sensor **208.** In other examples, tolerances for decenter may be e.g. ±2-10μm in the X-Z plane and of e.g. ±2-10μm in the Y direction, as well as e.g. ±0.05°-0.15° for a tilt of lens barrel with respect to the image sensor Y.

The TTL of the lens may be 5-22mm. The image sensor diagonal may be 6mm < sensor diagonal < 30mm. The 35eqFL may be 15mm < equivalent focal length < 200mm. The TTL/EFL ratio may vary in the range 0.7 < TTL/EFL < 1.5.

A window position measurement mechanism **1420** shown in FIG. 14B comprises one or more magnets and one or more Hall sensors shown in FIGS. 20C-E. The magnets are fixedly coupled to a cam follower **1402,** and the Hall sensor(s) is (are) fixedly coupled to a side limiter **1406.** Mechanism **1420** senses the position of the cam follower relative to side limiter **1406** and host device **250.** The camera is mechanically coupled to the host device and the side limiter is mechanically coupled to the camera.

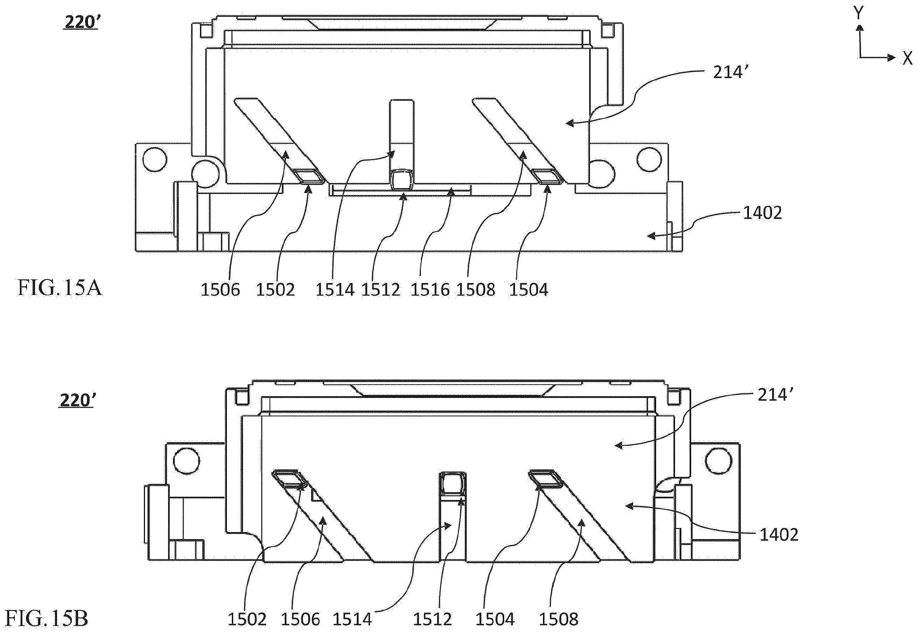

FIG. 14B shows a perspective view of frame **220'** in a pop-out state. A pop-out camera such as **1400** is formed when optics module **600'** is inserted into frame **220'.** Window frame **214',** cam follower **1402** and side limiter **1406** move with respect to each other. Window frame **214'** and cam follower **1402** also move with respect to host device **250,** but side limiter **1406** does not move with respect to host device **250.** Camera **1400** is switched from a pop-out state to a collapsed state by moving window frame **214'** in a positive X direction with respect of host device **250** and side limiter **1406.** Window frame **214'** is moved by actuator **212'** via cam follower **1402.** The movement of cam follower **1402** is substantially parallel to the X axis, and this movement is translated in a movement of window frame **214'** substantially parallel to the Y axis. This translation of movements in X direction and in Y direction is described in FIG. 15A-B. As for the movement along Y, window frame **214'** applies pressure to the lens barrel that translates into a movement of the collapsible lens barrel section towards the image sensor. Cam follower **1402** is coupled via springs **1408** to a pop-out actuator **1412.** Actuator **1412** moves cam follower **1402** e.g. via a screw stepper motor or another actuation method. The movement is mediated by the springs **1408.** Springs **1408** may act as shock absorber for camera **1400.** E.g. when host device **250** is dropped and hits another object, a large force may act on window frame **214'.** By means of springs **1408,** this large force may be translated into a collapse of the pop-out camera, thereby mediating a large portion of the large force. Internal module seal **1404** may act as an additional shock absorber.

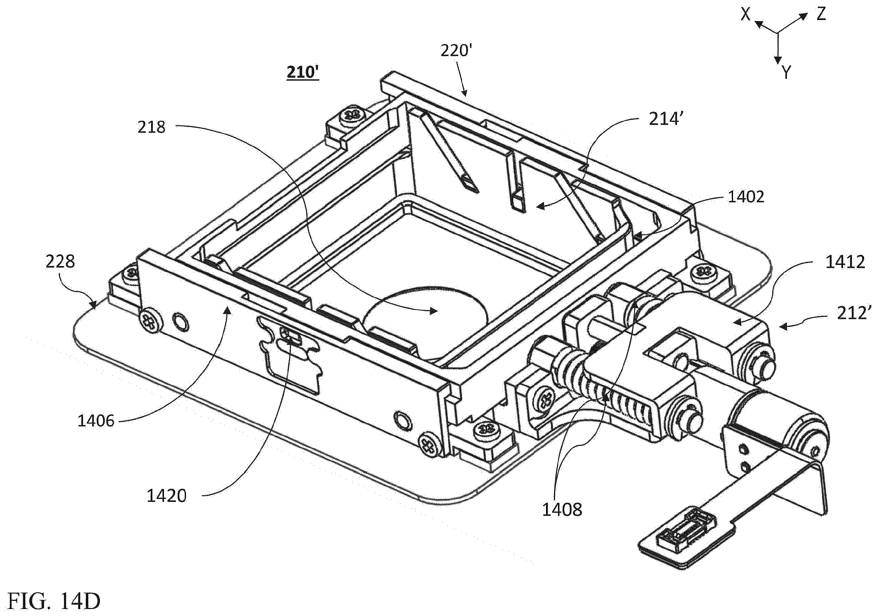

FIG. 14C shows a cross sectional view of camera **1400** in a collapsed ("c") or non-operative state. FIG. 14D shows a perspective view of frame **220'** in a collapsed state. To switch optics module **600'** to the collapsed state, actuator **212'** decreases air-gap $d_{N-1}$ by moving the window frame **214'** to apply pressure to the lens barrel that translates into a movement of the collapsible lens barrel section towards the image sensor. In the collapsed state, cTTL may be 5-12mm. and collapsed air-gap c-$d_{N-1}$ may be 0.05-1.5mm.

FIG. 15A shows the frame **220'** of example **1400** in a cross sectional view via X-Y plane in a pop-out state. A switching pin **1502** and a switching pin **1504** are rigidly coupled to cam follower **1402.** A side limiter pin **1512** is fixedly coupled to side limiter **1406** and slides within a vertically oriented limiter groove **1514.** Switching pin **1502** and **1504** slide within switching grooves **1506** and **1508.** Switching pins **1502** and **1504** have a diamond shape which is superposed by a curvature having a large radius of curvature for minimizing contact stress acting between the pins and window frame **214'.** Side limiter pin **1512** has a rectangular shape superposed by a curvature having a large radius of curvature for minimizing contact stress.

When cam follower **1402** is moved in a negative X direction, the inclination of switching grooves **1506** and **1508** leads to a downward movement (in a negative Y direction) of window frame **214'.** This downward movement is used to switch the camera to the collapsed state. The downward movement is limited and guided by side limiter pin **1512.** The inclination of switching grooves **1506** and **1508** may e.g. be between 20 - 80 degrees with respect to a vertical Y axis.

FIG. 15B shows the frame **220'** of FIG. 15A in a collapsed state. To switch the camera from the collapsed state to a pop-out state, cam follower **1402** is moved in a positive X direction and the inclination of switching grooves **1506** and **1508** leads to an upward movement (in a positive Y direction) of window frame **214'**.

FIG. 16A shows a cross sectional view and FIG. 16B show a perspective view of optics module **600'** in a pop-out state. Module **600'** comprises an optics frame **1650**, first collapsible lens barrel section **604** (lens elements not shown here), second fixed lens barrel section **608**, three springs **614** (not all visible here), a side cover **1604**, a top cover **1606** and three stoppers **1608** (not all visible here). Each spring sits on one of three spring holders **1612** (not all visible here). Optics frame **1650** holds all components of optics module **600'** except the lens elements that are included in the first and the second lens barrel sections. Stoppers **1608** are rigidly coupled to top cover **1606** and ensure that the collapsible lens barrel section **(604)** is not in direct contact with window frame **214**.

A "penalty" p for a diameter of an optics module is defined as the difference between the diameter of the optics module and the largest diameter of a lens included in the optics module. For optics module **600'**, $d_{module}$ is slightly larger than the largest diameter of lens **620**, represented by the diameter of $L_N$. Therefore, for optics module **600'**, penalty p is $p = p_1 + p_2$ and may be 0.5mm-8mm.

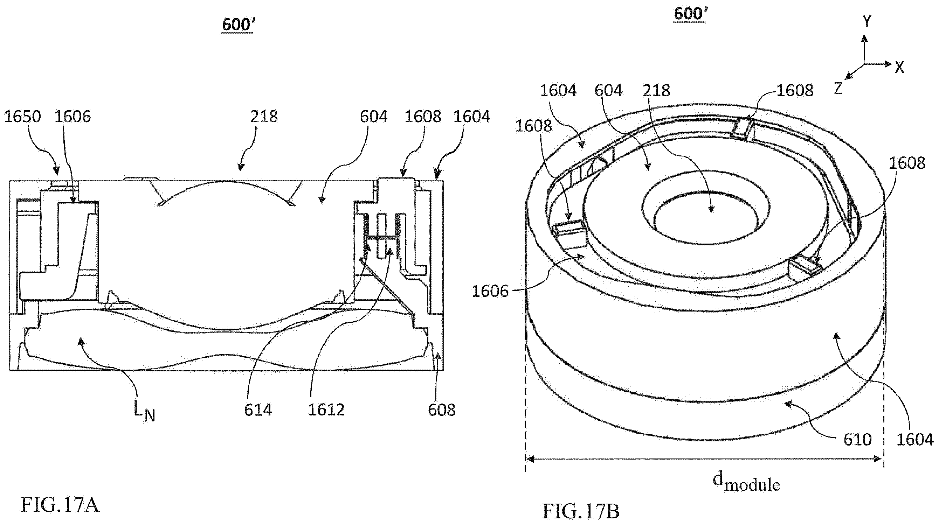

FIG. 17A shows optics module **600'** in cross-section and FIG. 17B shows the module in perspective in a collapsed state. In the collapsed state, springs **614** are compressed.

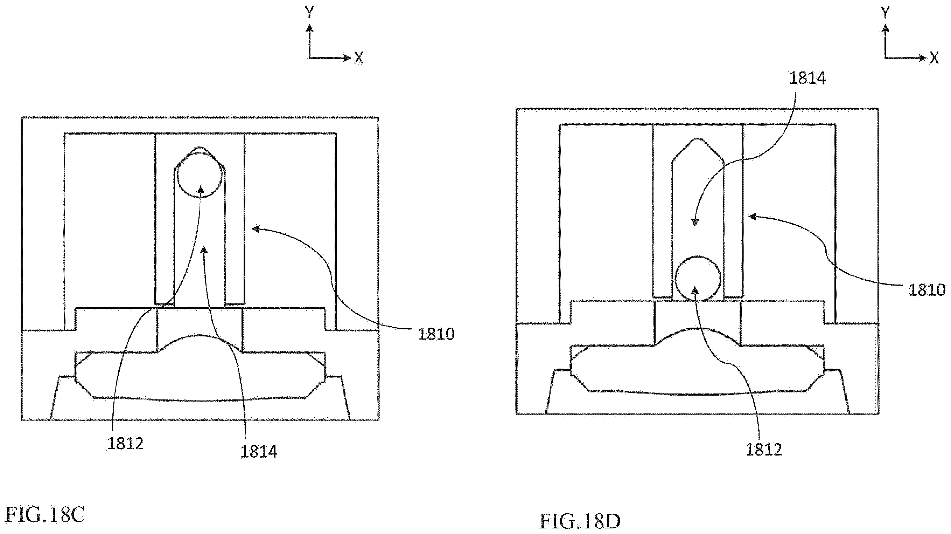

FIGS. 18A-18F shows optics frame **1650** in various positions and with various details of its components. FIG. 18A shows optics frame **1650** in a pop-out state and FIG. 18B shows optics frame **1650** in a collapsed state, both in a perspective view. Collapsible lens barrel section **604** is coupled to optics frame **1650** via a "Maxwell kinematic coupling" mechanism. The Maxwell kinematic coupling mechanism comprises three v-groove/pin pairs **1810** that act as a guiding and positioning mechanism that ensures that collapsible lens barrel section **604** is kept in a fixed position relative to the other optical elements such as image sensor **208** with high accuracy. Each v-groove/pin pair **1810** is identical and includes a hemispherical pin **1812** and a v-groove **1814**. More details of a v-groove/pin pair **1810** are given in FIG. 18C (for the pop-out state) and FIG. 18D (for the collapsed state). In other examples, the pins may be round or diamond-shaped or canoe-shaped. The v-grooves shown in FIG. 18A-18D have an angle of about 90 degrees. In other examples, the angle of the v-grooves may vary between 30 to 150 degrees.

Pairs **1810** are distributed at equal distance from each other. By means of the three v-groove/pin pairs **1810**, optics frame **1650** supports narrow tolerances in terms of accuracy as well as repeatability for decenter in X-Z and Y as well as for tilt. Here and in the description of FIGS. 19A and 19B, "tolerances" refer to tolerances between collapsible lens barrel section **604** the fixed lens barrel section **608**.

Optics frame **1650** as well as optics module **600"** below may be designed to support accuracy tolerances for decenter and reliability tolerances like those of camera **200**.

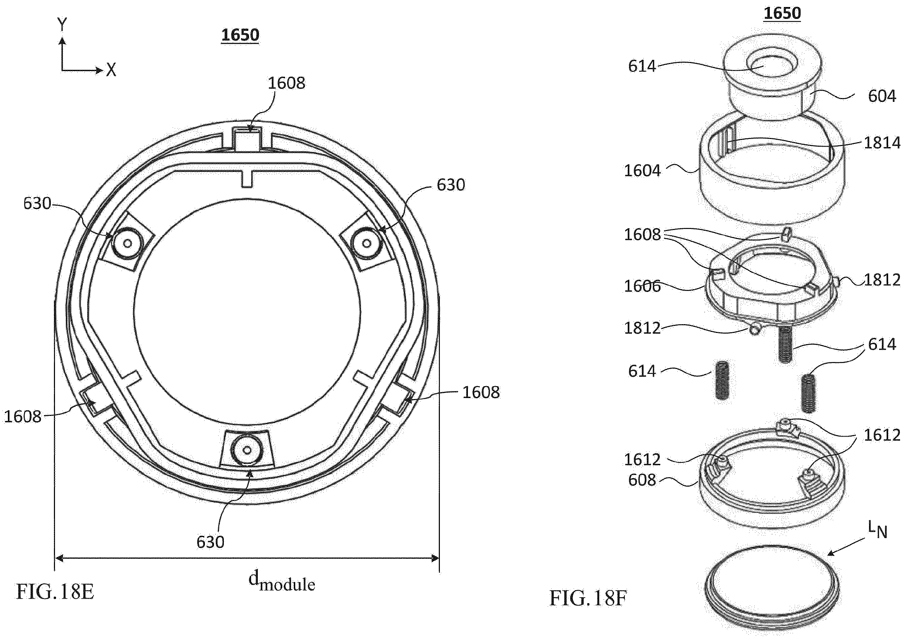

FIG. 18E shows optics frame **1650** in a top view. FIG. 18F shows optics frame **1650** in an exploded view showing the single parts that **1650** may be assembled from. Three spring holders **1612** keep the three respective springs **614** in a fixed position. One may assemble optics frame **1650** from the bottom to the top. One may start an assembly process with inserting $L_N$ into fixed lens barrel section **608**, then insert springs **614** into spring holders **1612**, then put top cover **1606**, then put side cover **1604** and then insert the collapsible lens barrel **604** on top. In some examples such as shown in FIG. 2A-D and FIG. 4A-B, a lens such as lens **420** may be included in an optics frame such as **1650**. Lens **420** includes a single group of lens elements only and may be included entirely in a collapsible lens barrel such as **604**. In some examples, collapsible lens barrel **604** and top cover **1606** may be one single unit.

FIG. 19A and FIG. 19B show (in perspective and cross section respectively) another optics module numbered **600"**. Optics module numbered **600"** comprises a guiding and positioning mechanism for keeping collapsible lens barrel section **604** in a fixed position with high accuracy. The guiding and positioning mechanism is based on a yoke-magnet pair. A yoke **2002** is fixedly coupled to top cover **1606'**, and a permanent magnet **2004** is fixedly coupled to the side cover **1604'**. Through the use of yoke **2002** and magnet **2004**, top cover **1606** and the side cover **1604** are attracted to each other, keeping a constant distance and orientation to each other. Optics module **1650'** thus supports narrow tolerances in terms of accuracy as well as repeatability for decenter in X-Z and Y and for tilt.

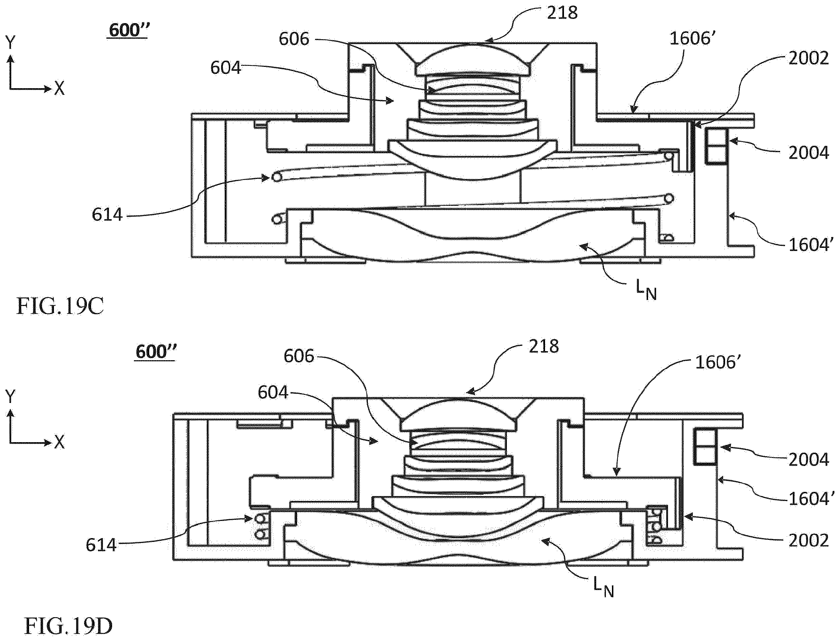

FIG. 19C shows optics module **600"** in a pop-out state in a cross-sectional view. A side cover **1604'** acts also as a second and fixed lens barrel section carrying a second group of lens elements, i.e. no additional component acting as second lens barrel section is required. FIG. 19D shows optics module **600"** in a collapsed state in a cross-sectional view.

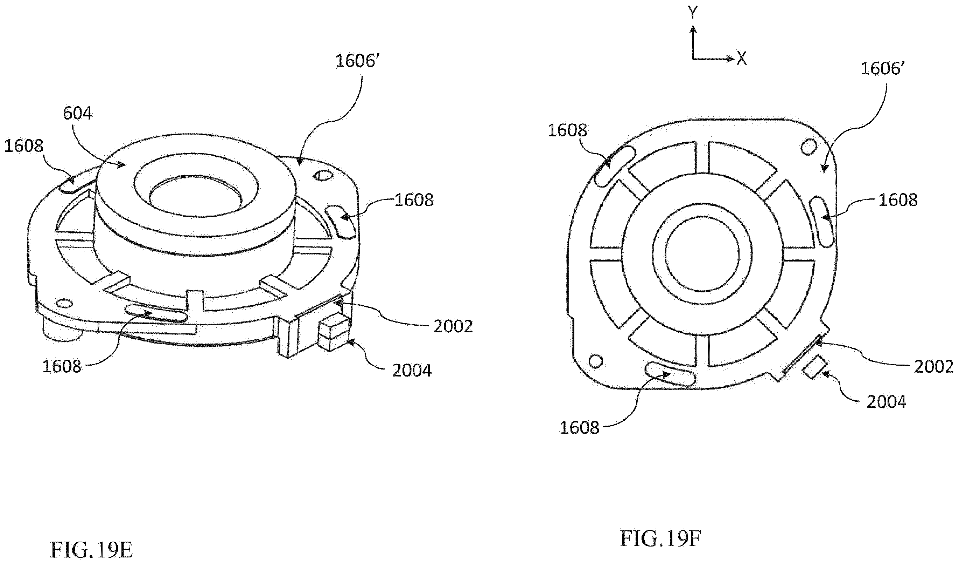

FIG. 19E shows a perspective view and FIG. 19F shows a top view of top cover **1606'** and magnet **2004**.

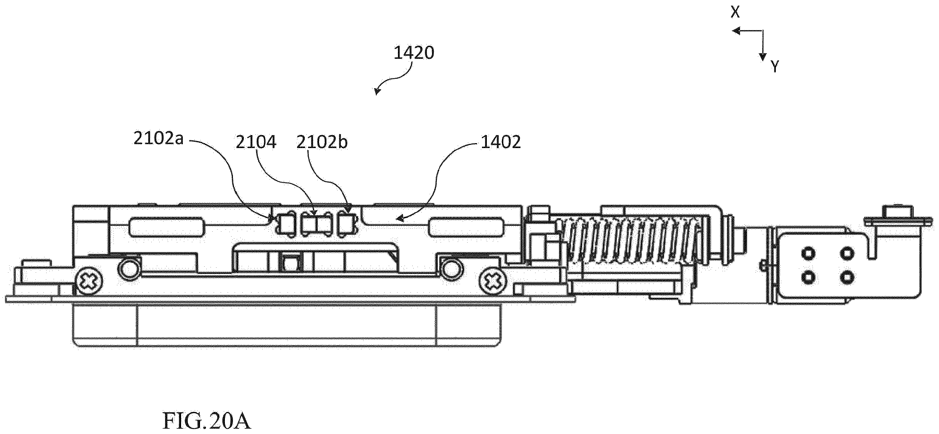

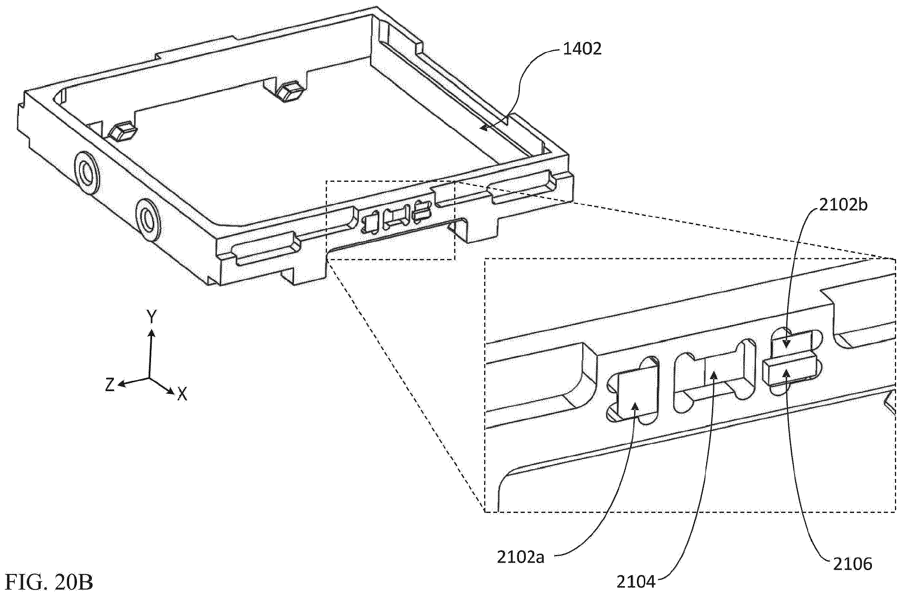

FIG. 20A shows a side view and FIG. 20B shows a perspective view of a magnet part of window position measurement mechanism **1420** in a collapsed state. Two side magnets **2102a** and **2102b** are located on both sides of an inner (auxiliary) magnet **2104**. All magnets are fixedly coupled to cam follower **1402**. Magnets **2102a**, **2102b** and **2104** create a magnetic field that is sensed by Hall sensor **2106**. Hall sensor **2106** is fixedly coupled to side limiter **1406** (not shown here). The magnetic field sensed by Hall sensor **2106** depends on the relative position of cam follower **1402** and side limiter **1406**. That is, mechanism **1420** allows sensing of the relative position of cam follower **1402** and side limiter **1406** continuously along a stroke that may be in a range 1-10mm.

FIG. 20C shows a side view of magnets **2102a, 2102b, 2104** and Hall sensor **2106,** with camera **1400** shown in a collapsed state. FIG. 20D shows a side view of magnets **2102a, 2102b, 2104** and Hall sensor **2106,** with camera **1400** shown in a pop-out state. The stroke extends between the extreme positions shown here, i.e. between the collapsed state and the pop-out state. In some examples, mechanism **1420** may measure the relative position of **1402** and **1406** with the same accuracy along the entire stroke. In other examples and beneficially, mechanism **1420** may measure the relative position of **1402** and **1406** with a higher accuracy close to the extreme positions shown here, and with a lower accuracy in other positions.

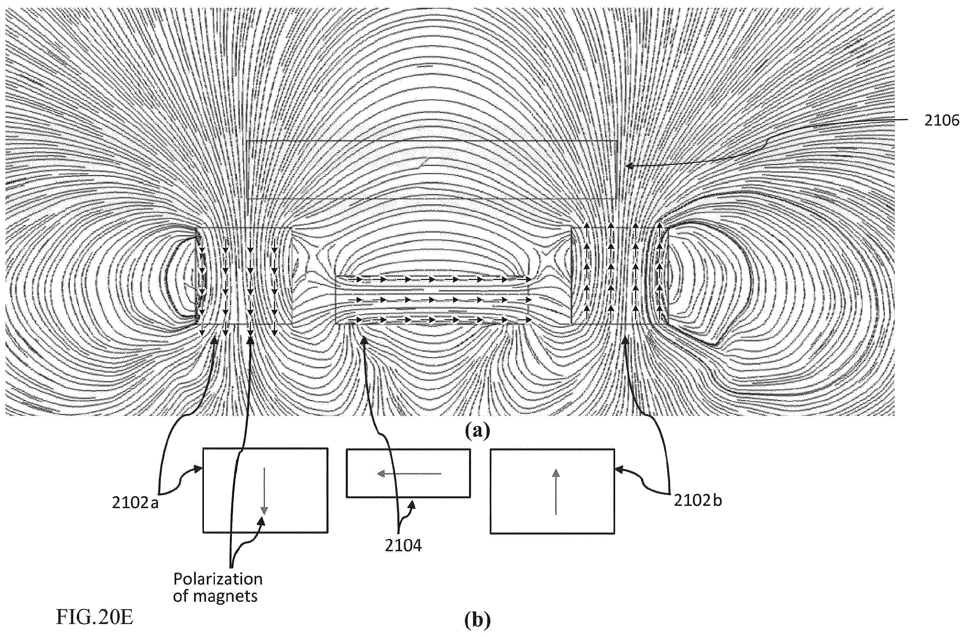

FIG. 20E shows an example of (a) a design and (b) the magnetic field of mechanism **1420,** with magnetization of magnets **2102a, 2102b** and **2104** shown.

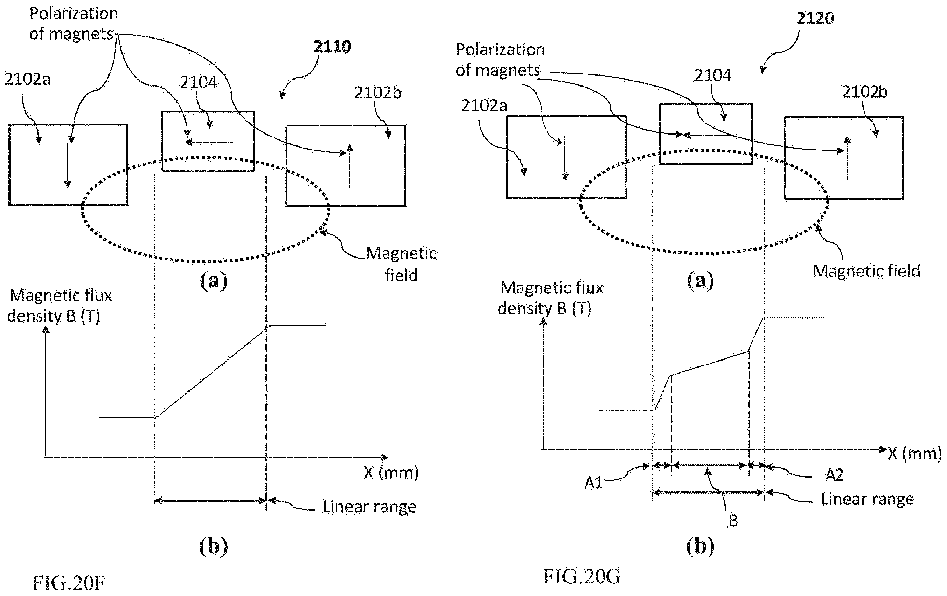

FIG. 20F shows an example of a magnet configuration **2110** that may be included in a position measurement mechanism such as **1420.** A configuration of magnets **2102a, 2102b** and **2104** is shown in (a), and magnetic flux density versus a position X as created by the magnet configuration of (a) is shown in (b). A large and substantially identical slope $\Delta B/\Delta X$ may be achieved along a linear range. The linear range of **2110** may extend between 1-10mm.

FIG. 20G shows another example of a magnet configuration **2120** that may be included in a position measurement mechanism such as **1420.** A configuration of magnets **2102a, 2102b** and **2104** is shown in (a), and magnetic flux density versus a position X as created by the magnet configuration of (a) is shown in (b). The linear range is divided into three sub-ranges A1, B and A2. In the sub-ranges A1 and A2, slope $\Delta B/\Delta X$ is larger than the slope in sub-range B. For example, a slope in the sub-ranges A1 and A2, $\Delta B/\Delta X(A)$, may be 5 times, 10 times or 25 times larger than a slope in the sub-range B, $\Delta B/\Delta X(B)$. For example, $\Delta B/\Delta X(A) \sim 500mT/mm$, and $\Delta B/\Delta X(B) \sim 50mT/mm$, so that a ratio of $[\Delta B/\Delta X(A)]/[\Delta B/\Delta X(B)]=10$. The division in of the linear range in sub ranges with different slopes may be beneficial for a position measurement mechanism such as **1420,** as a higher accuracy may be required in the extreme regions close to the positions of the pop-out state and the collapsed state.

In summary, disclosed herein are digital cameras with a pop-out mechanisms that allow for large EFLs and large image sensor sizes and low camera heights in a collapsed mode.

While this disclosure has been described in terms of certain examples and generally associated methods, alterations and permutations of the examples and methods will be apparent to those skilled in the art. The disclosure is to be understood as not limited by the specific examples described herein, but only by the scope of the appended claims.

It is appreciated that certain features of the presently disclosed subject matter, which are, for clarity, described in the context of separate examples, may also be provided in combination in a single example. Conversely, various features of the presently disclosed subject matter, which are, for brevity, described in the context of a single example, may also be provided separately or in any suitable sub-combination.

Furthermore, for the sake of clarity the term "substantially" is used herein to imply the possibility of variations in values within an acceptable range. According to one example, the term "substantially" used herein should be interpreted to imply possible variation of up to 10% over or under any specified value. According to another example, the term "substantially" used herein should be interpreted to imply possible variation of up to 5% over or under any specified value. According to a further example, the term "substantially" used herein should be interpreted to imply possible variation of up to 2.5% over or under any specified value.

Unless otherwise stated, the use of the expression "and/or" between the last two members of a list of options for selection indicates that a selection of one or more of the listed options is appropriate and may be made.

It should be understood that where the claims or specification refer to "a" or "an" element, such reference is not to be construed as there being only one of that element.

**Claims**

**1.** A camera (200, 1104, 1202, 1204, 1400), comprising:

an optics module (240, 600, 600') comprising a lens assembly (206, 620, 620', 1000, 1300) that includes N lens elements $L_1$-$L_N$ starting with $L_1$ on an object side, wherein $N \geq 4$ and wherein the lens assembly has a back focal length BFL;
a pop-out mechanism (210) configured to actuate the lens assembly to an operative pop-out state and to a collapsed state, wherein the lens assembly has a total track length TTL in the operative pop-out state and a collapsed total track length cTTL in the collapsed state, and wherein the pop-out mechanism is configured to control the BFL such that cTTL/EFL < 0.55, wherein, in the operative pop-out state, the BFL is larger than any air-gap between lens elements and the lens assembly has an effective focal length EFL in the range of 7mm to 18mm, and
an image sensor (208) having sensor diagonal $S_D$.

2. The camera of claim 1, wherein the pop-up mechanism (210) includes a window frame (214, 214') engageable with the optics module, wherein the window frame does not touch the optics module in the pop-out state and wherein the window frame is operable to press on the optics module to bring the camera to the collapsed state, wherein $S_D$ is in the range of 4.5mm to 10mm, and wherein the lens assembly has a 35mm equivalent focal length 35eqFL larger than 45mm and smaller than 180mm

3. The camera of claim 1, wherein $S_D$ is in the range of 10mm to 20mm, and wherein the lens assembly has a 35mm equivalent focal length 35eqFL larger than 40mm and smaller than 180mm.

4. The camera of claim 1, wherein a ratio TTL/EFL is smaller than 1.0 and larger than 0.7.

5. The camera of claim 1, wherein BFL is larger than TTL/3 and smaller than TTL/1.5.

6. The camera of claim 1, wherein the pop-out mechanism is further configured to control at least one air-gap between lens elements.

7. The camera of claim 1, wherein the lens has a lens element with a largest lens diameter $d_L$, and wherein a penalty between a largest diameter $d_{module}$ of the optics module and the largest lens diameter $d_L$ is smaller than 4mm.

8. The camera of claim 1, wherein the pop-out mechanism comprises springs and a guiding and positioning mechanism, wherein the guiding and positioning mechanism enables sufficient z-decenter and xy-decenter accuracy between lens elements in the operative pop-out state and enables repeatability in switching between operative and collapsed states, wherein the sufficient decenter accuracy is less than 0.1mm decenter and wherein the repeatability is less than 0.05mm decenter.

9. The camera of claim 1, wherein the pop-out mechanism comprises a guiding and positioning mechanism based on a pin and groove assembly.

10. The camera of claim 1, wherein the pop-out mechanism comprises a guiding and positioning mechanism based on a stopper.

11. The camera of claim 1, wherein the pop-out mechanism comprises a guiding and positioning mechanism based on kinematic coupling mechanism.

12. A multi-camera (1200), comprising:

a first camera (1204) that includes a first lens assembly (1020, 1300) with a first field of view $FOV_1$ and N lens elements $L_1$-$L_N$ starting with $L_1$ on an object side wherein $5 \leq N \leq 7$, a first image sensor having a sensor diagonal $S_{D1}$, and a first pop-out mechanism (1206) that controls a largest air-gap d between two consecutive lens elements to bring the first camera to an operative pop-out state and a collapsed state, wherein the first lens assembly has a first 35mm equivalent focal length $35eqFL_1$, a total track length $TTL_1$ in the operative state and a collapsed total track length $cTTL_1$ in the collapsed state, wherein $S_{D1}$ is in the range 7-20mm and wherein $cTTL_1/ S_{D1} < 0.6$; and
a second camera (1202) and including a second lens assembly (420, 620, 620', 1020, 1300) with a second field of view $FOV_2$ smaller than $FOV_1$, the second lens assembly comprising M lens elements $L_1$-$L_M$ starting with $L_1$ on an object side wherein $M \geq 4$, and a second pop-out mechanism (1206) configured to actuate the second camera to an operative state and a collapsed state, wherein the second camera has a back focal length BFL that is larger than any air-gap between lens elements and has a second camera effective focal length $EFL_2$ of 7-18 mm in an operative state wherein the second lens assembly has a second 35mm equivalent focal length $35eqFL_2$, a total track length $TTL_2$ in the operative state and a collapsed total track length $cTTL_2$ in the collapsed state, and wherein cTTL/EFL < 0.55.

13. The multi-camera of claim 12, wherein $cTTL_1 = cTTL_2 \pm 10\%$, wherein $35eqFL_2 \geq 1.5 \times 35eqFL_1$ and wherein $35eqFL_1$ is larger than 24 mm.

14. The multi-camera of claim 12, further comprising a pop-out mechanism cover (1206) that covers both the first camera and the second camera.

**Patentansprüche**

1. Kamera (200, 1104, 1202, 1204, 1400), Folgendes umfassend:

   ein Optikmodul (240, 600, 600'), das eine Objektivanordnung (206, 620, 620', 1000, 1300) umfasst, die N Objektivelemente $L_1$-$L_N$, beginnend mit $L_1$, auf einer Objektseite einschließt, wobei $N \geq 4$ und wobei die Objektivanordnung eine Rückbrennweite BFL aufweist;
   einen Popout-Mechanismus (210), der so konfiguriert ist, dass er die Objektivanordnung in einen Popout-Betriebszustand und in einen zusammengeklappten Zustand bringt, wobei die Objektivanordnung eine Gesamtspurlänge TTL in dem Popout-Betriebszustand und eine zusammengeklappte Gesamtspurlänge cTTL in dem zusammengeklappten Zustand aufweist, und wobei der Popout-Mechanismus so konfiguriert ist, dass er die BFL so steuert, dass cTTL/EFL < 0,55, wobei die BFL in dem Popout-Betriebszustand größer als ein beliebiger Luftspalt zwischen Objektivelementen ist und die Objektivanordnung eine effektive Brennweite EFL im Bereich von 7 mm bis 18 mm aufweist, und
   ein Bildsensor (208), der eine Sensordiagonale $S_D$ aufweist.

2. Kamera nach Anspruch 1, wobei der Popout-Mechanismus (210) einen Fensterrahmen (214, 214') einschließt, der mit dem Optikmodul in Eingriff gebracht werden kann, wobei der Fensterrahmen das Optikmodul im Popout-Zustand nicht berührt und wobei der Fensterrahmen betreibbar ist, um auf das Optikmodul zu drücken, um die Kamera in den zusammengeklappten Zustand zu bringen, wobei $S_D$ im Bereich von 4,5 mm bis 10 mm liegt, und wobei die Objektivanordnung eine 35 mm-äquivalente Brennweite 35eqFL von mehr als 45 mm und weniger als 180 mm aufweist.

3. Kamera nach Anspruch 1, wobei $S_D$ im Bereich von 10 mm bis 20 mm liegt, und wobei die Objektivanordnung eine 35 mm-äquivalente Brennweite 35eqFL von mehr als 40 mm und weniger als 180 mm aufweist.

4. Kamera nach Anspruch 1, wobei ein Verhältnis TTL/EFL kleiner als 1,0 und größer als 0,7 ist.

5. Kamera nach Anspruch 1, wobei BFL größer als TTL/3 und kleiner als TTL/1,5 ist.

6. Kamera nach Anspruch 1, wobei der Popout-Mechanismus ferner so konfiguriert ist, dass er mindestens einen Luftspalt zwischen Objektivelementen steuert.

7. Kamera nach Anspruch 1, wobei das Objektiv ein Objektivelement mit einem größten Objektivdurchmesser $d_L$ aufweist, und wobei eine Einbuße zwischen einem größten Durchmesser $d_{Modul}$ des Optikmoduls und dem größten Objektivdurchmesser $d_L$ kleiner als 4 mm ist.

8. Kamera nach Anspruch 1, wobei der Popout-Mechanismus Federn und einen Führungs- und Positionierungsmechanismus umfasst, wobei der Führungs- und Positionierungsmechanismus eine ausreichende z-Dezentrier- und eine xy-Dezentrierpräzision zwischen Objektivelementen im den Popout-Betriebszustand ermöglicht und die Wiederholbarkeit beim Umschalten zwischen Betriebs- und zusammengeklapptem Zustand ermöglicht, wobei die ausreichende Dezentrierpräzision weniger als 0,1 mm Dezentrierung beträgt und wobei die Wiederholbarkeit weniger als 0,05 mm Dezentrierung beträgt.

9. Kamera nach Anspruch 1, wobei der Popout-Mechanismus einen Führungs- und Positionierungsmechanismus umfasst, der auf einer Stift-Nut-Anordnung basiert.

10. Kamera nach Anspruch 1, wobei der Popout-Mechanismus einen Führungs- und Positionierungsmechanismus umfasst, der auf einem Anschlag basiert.

11. Kamera nach Anspruch 1, wobei der Popout-Mechanismus einen Führungs- und Positionierungsmechanismus umfasst, der auf einem kinematischen Kopplungsmechanismus basiert.

12. Mehrfach-Kamera (1200), Folgendes umfassend:

    eine erste Kamera (1204), einschließend eine erste Objektivanordnung (1020, 1300) mit einem ersten Sichtfeld $FOV_1$ und N Objektivelementen $L_1$-$L_N$, beginnend mit $L_1$, auf einer Objektseite, wobei $5 \leq N \leq 7$, einen ersten Bildsensor mit einer Sensordiagonalen $S_{D1}$, und einen ersten Popout-Mechanismus (1206), der einen größten Luftspalt d zwischen zwei aufeinanderfolgenden Objektivelementen steuert, um die erste Kamera in einen Popout-Betriebszustand und einen zusammengeklappten Zustand zu bringen, wobei die erste Objektivanordnung eine erste 35 mm-äquivalente Brennweite $35eqFL_1$, eine Gesamtspurlänge $TTL_1$ in dem Betriebszustand und eine zusammengeklappte Gesamtspurlänge $cTTL_1$ im zusammengeklappten Zustand aufweist, wobei $S_{D1}$ im Bereich 7-20 mm liegt und wobei $cTTL_1/S_{D1} < 0,6$; und

eine zweite Kamera (1202) und einschließend eine zweite Objektivanordnung (420, 620, 620', 1020, 1300) mit einem zweiten Sichtfeld $FOV_2$ kleiner als $FOV_1$, wobei die zweite Objektivanordnung M Objektivelemente $L_1$-$L_M$, beginnend mit $L_1$ auf einer Objektivseite umfasst, wobei $M \geq 4$, und einen zweiten Popout-Mechanismus (1206), der so konfiguriert ist, dass er die zweite Kamera in einen Betriebszustand und einen zusammengeklappten Zustand bringt, wobei die zweite Kamera eine Rückbrennweite BFL aufweist, die größer als ein beliebiger Luftspalt zwischen Objektivelementen ist, und eine effektive Brennweite der zweiten Kamera $EFL_2$ von 7-18 mm in einem Betriebszustand aufweist, wobei die zweite Objektivanordnung eine zweite 35 mm-äquivalente Brennweite $35eqFL_2$, eine Gesamtspurlänge $TTL_2$ im Betriebszustand und eine zusammengeklappte Gesamtspurlänge $cTTL_2$ im zusammengeklappten Zustand aufweist, und wobei $cTTL/EFL < 0,55$.

13. Mehrfach-Kamera nach Anspruch 12, wobei $cTTL_1 = cTTL_2 \pm 10$ %, wobei $35eqFL_2 \geq 1,5 \times 35eqFL_1$ und wobei $35eqFL_1$ größer als 24 mm ist.

14. Mehrfach-Kamera nach Anspruch 12, ferner umfassend eine Popup-Mechanismus-Abdeckung (1206), die sowohl die erste Kamera als auch die zweite Kamera abdeckt.


**Revendications**

1. Appareil photo (200, 1104, 1202, 1204, 1400), comprenant :

   un module optique (240, 600, 600') comprenant un ensemble de lentilles (206, 620, 620', 1000, 1300) qui inclut N éléments de lentille $L_1$-$L_N$ en commençant par $L_1$ sur un côté de l'objet, dans lequel $N \geq 4$ et dans lequel l'ensemble de lentilles a une longueur focale arrière BFL ;
   un mécanisme de déploiement (210) configuré pour actionner l'ensemble de lentilles pour l'amener à un état de déploiement opérationnel et à un état replié, dans lequel l'ensemble de lentilles a une longueur de piste totale TTL dans l'état de déploiement opérationnel et une longueur de piste totale repliée cTTL dans l'état replié, et dans lequel le mécanisme de déploiement est configuré pour contrôler la BFL de telle sorte que cTTL/EFL < 0,55, dans lequel, à l'état de déploiement opérationnel, la BFL est plus grande que tout entrefer entre des éléments de lentille et l'ensemble de lentilles a une longueur focale effective EFL comprise entre 7 mm et 18 mm, et
   un capteur d'image (208) ayant une diagonale de capteur $S_D$.

2. Appareil photo selon la revendication 1, dans lequel le mécanisme d'éjection (210) inclut un cadre de fenêtre (214, 214') pouvant être mis en prise avec le module optique, dans lequel le cadre de fenêtre ne touche pas le module optique dans l'état de déploiement et dans lequel le cadre de fenêtre est utilisable pour appuyer sur le module optique pour amener la caméra à l'état replié, dans lequel $S_D$ se situe dans la plage de 4,5 mm à 10 mm, et dans lequel l'ensemble de lentilles a une longueur focale équivalente à 35 mm 35eqFL supérieure à 45 mm et inférieure à 180 mm

3. Appareil photo selon la revendication 1, dans lequel $S_D$ est comprise entre 10 mm et 20 mm, et dans lequel l'ensemble de lentilles a une distance focale équivalente à 35 mm 35eqFL supérieure à 40 mm et inférieure à 180 mm.

4. Appareil photo selon la revendication 1, dans lequel un rapport TTL/EFL est inférieur à 1,0 et supérieur à 0,7.

5. Appareil photo selon la revendication 1, dans lequel la BFL est supérieure à TTL/3 et inférieure à TTL/1,5.

6. Appareil photo selon la revendication 1, dans lequel le mécanisme de déploiement est en outre configuré pour contrôler au moins un entrefer entre des éléments de lentille.

7. Appareil photo selon la revendication 1, dans lequel la lentille a un élément de lentille avec un plus grand diamètre de lentille $d_L$, et dans lequel une pénalité entre un plus grand diamètre $d_{module}$ du module optique et le plus grand diamètre de lentille $d_L$ est inférieure à 4 mm.

**8.** Appareil photo selon la revendication 1, dans lequel le mécanisme de déploiement comprend des ressorts et un mécanisme de guidage et de positionnement, dans lequel le mécanisme de guidage et de positionnement permet une précision suffisante du décentrement z et du décentrement xy entre éléments de lentille dans l'état de déploiement opérationnel et permet la répétabilité dans la commutation entre les états opérationnel et replié, dans lequel la précision suffisante du décentrement est inférieure à 0,1 mm de décentrement et dans lequel la répétabilité est inférieure à 0,05 mm de décentrement.

**9.** Appareil photo selon la revendication 1, dans lequel le mécanisme de déploiement comprend un mécanisme de guidage et de positionnement basé sur un ensemble broche-rainure.

**10.** Appareil photo selon la revendication 1, dans lequel le mécanisme de déploiement comprend un mécanisme de guidage et de positionnement basé sur une butée.

**11.** Appareil photo selon la revendication 1, dans lequel le mécanisme de déploiement comprend un mécanisme de guidage et de positionnement basé sur un mécanisme de couplage cinématique.

**12.** Multi-caméra (1200) comprenant :

une première caméra (1204) qui inclut un premier ensemble de lentilles (1020, 1300) avec un premier champ de vision $FOV_1$ et N éléments de lentilles $L_1$-$L_N$ commençant avec $L_1$ sur un côté de l'objet dans lequel $5 \leq N \leq 7$, un premier capteur d'image ayant une diagonale de capteur $S_{D1}$, et un premier mécanisme de déploiement (1206) qui contrôle un plus grand entrefer d entre deux éléments de lentilles consécutifs pour amener la première caméra à un état de déploiement opérationnel et à un état replié, dans lequel le premier ensemble de lentilles a une première longueur focale équivalente à 35 mm $35eqFL_1$, une longueur de piste totale $TTL_1$ à l'état opérationnel et une longueur de piste totale repliée $cTTL_1$ à l'état replié, dans lequel $S_{D1}$ est compris entre 7 et 20 mm et dans lequel $cTTL_1/SD_1 < 0,6$ ; et
une deuxième caméra (1202) et incluant un deuxième ensemble de lentilles (420, 620, 620', 1020, 1300) avec un deuxième champ de vision $FOV_2$ plus petit que $FOV_1$, le deuxième ensemble de lentilles comprenant M éléments de lentilles $L_1$-$L_M$ commençant avec $L_1$ sur un côté de l'objet dans lequel $M \geq 4$, et un deuxième mécanisme de déploiement (1206) configuré pour actionner la deuxième caméra pour l'amener à un état opérationnel et à un état replié, dans lequel la deuxième caméra a une longueur focale arrière BFL qui est plus grande que tout entrefer entre éléments de lentille et a une longueur focale effective $EFL_2$ de deuxième caméra de 7-18 mm dans un état opérationnel dans lequel le deuxième ensemble de lentilles a une deuxième longueur focale équivalente à 35 mm $35eqFL_2$, une longueur de piste totale $TTL_2$ dans l'état opérationnel et une longueur de piste totale repliée $cTTL_2$ dans l'état replié, et dans lequel $cTTL/EFL < 0,55$.

**13.** Multi-caméra selon la revendication 12, dans laquelle $cTTL_1 = cTTL_2 \pm 10$ %, dans laquelle $35eqFL_2 \geq 1,5 \times 35eqFL_1$ et dans laquelle $35eqFL_1$ est supérieure à 24 mm.

**14.** Multi-caméra selon la revendication 12, comprenant en outre un couvercle (1206) de mécanisme de déploiement qui couvre à la fois la première et la deuxième caméra.

FIG.1A

FIG.1B

FIG.2A

FIG.2B

FIG.2C

EP 4 075 179 B1

FIG.2D

EP 4 075 179 B1

FIG.3A

FIG.3B

EP 4 075 179 B1

FIG.4A

EP 4 075 179 B1

240

218

204

232

$d_{module}$

FIG. 4B

FIG.4C

400

Object Side

Image Side

EP 4 075 179 B1

FIG.5A

EP 4 075 179 B1

FIG. 5B

FIG.6A

EP 4 075 179 B1

**600**

FIG.6B

39

FIG. 6C

FIG.6D

**600**

218

604

232

6A

6A

$d_{module}$

FIG.7

600

218

604

232

6B

6B

$d_{module}$

FIG.8

**212**

FIG.9A

EP 4 075 179 B1

212

FIG.9B

**1000**

FIG.10

**1100**

EP 4 075 179 B1

FIG.11A

FIG.11B

FIG.11C

1100

228

C-bump 236

218

214

1104

1102

X
Y
Z

FIG. 11D

EP 4 075 179 B1

FIG.12A

FIG.12B

**1200**

FIG.12C

EP 4 075 179 B1

FIG.12D

EP 4 075 179 B1

FIG. 13

FIG.14A

EP 4 075 179 B1

**210'**

FIG. 14B

FIG.14C

FIG. 14D

X
Y

220'

214'

1402

1506  1502  1514  1512  1516 1508  1504

FIG.15A

220'

214'

1402

1508

1504

1512

1502  1506  1514

FIG.15B

**600'**

FIG.16A

**600'**

FIG.16B

EP 4 075 179 B1

FIG.17A

FIG.17B

FIG.18B

FIG.18A

FIG.18C

FIG.18D

FIG.18F

FIG.18E

FIG.19A

FIG.19B

**600''**

Y
↑
└→X

606
604
218
1606'
2002
2004
614
1604'
L_N

FIG.19C

**600''**

Y
↑
└→X

606
604
218
1606'
2004
1604'
2002
614
L_N

FIG.19D

EP 4 075 179 B1

FIG.19E

FIG.19F

EP 4 075 179 B1

FIG.20A

FIG. 20B

EP 4 075 179 B1

2102a

2104

2102b

FIG.20C

2106

2104

2102a

2102b

2106

FIG.20D

Stroke

EP 4 075 179 B1

**(a)**

Polarization
of magnets

2102a    2104    2102b

2106

FIG.20E                                                        **(b)**

**2120**

2102b

2104

Polarization
of magnets

2102a

Magnetic field

Magnetic flux
density B (T)

**(a)**

X (mm)

A2

Linear range

B

A1

**(b)**

FIG.20G

**2110**

2102b

2104

Polarization
of magnets

2102a

Magnetic
field

Magnetic flux
density B (T)

**(a)**

X (mm)

Linear range

**(b)**

FIG.20F

73

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62904913
- US 63026317 B
- US 63037836 B
- US 2015153548 A1
- US 2011102911 A1
- US 20190107651 A1